# EUROPEAN PATENT SPECIFICATION

(11) **EP 1 978 584 B1**
(45) Date of publication and mention of the grant of the patent: **04.04.2012**
(21) Application number: 07707036.5
(22) Date of filing: 18.01.2007
(51) Int. Cl.: H01M 8/02, H01M 8/10

(54) **ELECTROLYTE MULTILAYER MEMBRANE FOR SOLID POLYMER FUEL CELL, MEMBRANE-ELECTRODE ASSEMBLY, AND FUEL CELL**
ELEKTROLYT-MEHRSCHICHTMEMBRAN FÜR EINE FESTPOLYMER-BRENNSTOFFZELLE, MEMBRANELEKTRODENBAUGRUPPE UND BRENNSTOFFZELLE
MEMBRANE MULTICOUCHE ÉLECTROLYTIQUE POUR PILE À COMBUSTIBLE POLYMÈRE SOLIDE, ENSEMBLE ÉLECTRODE-MEMBRANE, ET PILE À COMBUSTIBLE

(30) Priority: 26.01.2006 JP 2006018040
(43) Date of publication of application: 08.10.2008
(73) Proprietor: Kuraray Co., Ltd., Okayama 710-8622 (JP)
(72) Inventor: ONO, Tomohiro, Tsukuba-shi Ibaraki 305-0841 (JP); NAKAI, Shinji, Tsukuba-shi Ibaraki 305-0841 (JP); KAWASAKI, Masahiro, Tsukuba-shi Ibaraki 305-0841 (JP); NAKANO, Takeshi, Tsukuba-shi Ibaraki 305-0841 (JP); OGI, Hiroyuki, Tsukuba-shi Ibaraki 305-0841 (JP)
(74) Representative: Müller-Boré & Partner Patentanwälte
(86) International application number: PCT/JP2007/050732
(87) International publication number: WO 2007/086309

(56) References cited:
- JP-A- 2001 210 336
- JP-A- 2004 091 531
- JP-A- 2004 273 287
- JP-A- 2004 303 541
- JP-A- 2005 216 613
- JP-A- 2005 246 800
- JP-A- 2005 246 800
- JP-A- 2006 054 080
- YOSSEF A. ELABD, EUGENE NAPADENSKY, JAMES M. SLOAN, DAWN M. CRAWFORD, CHARLES W. WALKER: "TRIBLOCK COPOLYMER IONOMER MEMBRANES PART I. Methanol and proton transport" JOURNAL OF MEMBRANE SCIENCE, vol. 217, 2003, pages 227-242, XP002593474

## Description

### TECHNICAL FIELD

This invention relates to a polymer electrolyte membrane having not only high proton conductivity but high methanol barrier properties and preferably used in direct methanol fuel cells, and a membrane electrode assembly and a fuel cell in both of which the polymer electrolyte membrane is used.

### BACKGROUND ART

A polymer electrolyte fuel cell is generally composed as follows. First, on both sides of a polymer electrolyte membrane having ion conductivity, catalyst layers comprising a platinum group metal catalyst supported on carbon powder and an ion-conducting binder comprising a polymer electrolyte are formed, respectively. On the outsides of the catalyst layers, gas diffusion layers as porous materials through which fuel gas and oxidant gas can pass are formed, respectively. As the gas diffusion layers, carbon paper, carbon cloth, etc. are used. An integrated combination of the catalyst layer and the gas diffusion layer is called a gas diffusion electrode, and a structure wherein a pair of gas diffusion electrodes are bonded to the electrolyte membrane so that the catalyst layers can face to the electrolyte membrane, respectively, is called a membrane electrode assembly (MEA). On both sides of the membrane electrode assembly, separators having electric conductivity and gastightness are placed. Gas passages supplying the fuel gas or oxidant gas (e.g., air) onto the electrode surfaces are formed, respectively, at the contact parts of the membrane electrode assembly and the separators or inside the separators. Power generation is started by supplying a fuel gas such as hydrogen or methanol to one electrode (fuel electrode) and an oxidant gas containing oxygen such as air to the other electrode (oxygen electrode). Namely, the fuel gas is ionized at the fuel electrode to form protons and electrons, the protons pass through the electrolyte membrane and transferred to the oxygen electrode, the electrons are transferred via an external circuit formed by connecting both electrodes into the oxygen electrode, and they react with the oxidant gas to form water. Thus, the chemical energy of the fuel gas is directly converted into electric energy which can be taken out.

In direct methanol fuel cells wherein methanol is directly fed into the anode of the fuel cell without reforming, perfluorocarbonsulfonic acid polymer electrolyte membranes represented by Nafion 117 (registered trade mark of Dupont Co., as is the same hereinafter) having a membrane thickness of about 175 µm have, generally, so far been used as electrolyte membranes, and development thereof as power sources for mobile equipment such as cellular phones and notebook-sized personal computers has been made. Although these electrolyte membranes have such a merit that the electric resistance of the membrane is low, it is pointed out that a phenomenon that methanol as a fuel permeates the electrolyte membrane from one electrode side to the other electrode side (methanol crossover) is liable to occur and thereby power generation efficiency is lowered.

Thus, non-perfluorocarbonsulfonic acid polymer electrolyte membranes having small methanol permeability have been studied (Patent document 1, Patent document 2, Non-patent document 1).
Engineering plastic polymer electrolyte membranes described in Patent document 1 and Patent document 2 do not readily form ion channels, which is different from the case of perfluorocarbonsulfonic acid polymer electrolyte membranes, and it is possible to reduce methanol permeability However, they have a defect that the electric resistance of the membrane is relatively high, and when the electric resistance of the membrane is lowered by increasing the amount of ionic groups introduced, it is liable to swell easily. Further, a defect that imperfect bonding between the membrane and an electrode tends to occur is also known. Therefore, it is the present state of things that engineering plastic polymer electrolyte membranes have not displayed sufficient performance as an electrolyte membrane used in direct methanol fuel cells.

It is described in Non-patent document 1 that sulfonated polystyrene-b-polyisobutylene-b-polystyrene triblock copolymers (sulfonated SiBuS) also have higher methanol barrier properties compared with perfluorocarbonsulfonic acid polymer electrolyte membranes, but it is the present state of things that electrolyte membranes having satisfactory performance for direct methanol fuel cells have not yet been obtained.
Patent document 1: JP-A-2003-288916
Patent document 2: JP-A-2003-331868
Non-patent document: J. Membrane Science 217 (2003) 227

### DISCLOSURE OF INVENTION

### PROBLEMS TO BE SOLVED BY THE INVENTION

The object of this invention is to provide a polymer electrolyte membrane having high ion conductivity, methanol barrier properties and good bonding properties to electrodes at the same time, and a membrane electrode assembly and a polymer electrolyte fuel cell in both of which the polymer electrolyte membrane is used.

### MEANS FOR SOLVING THE PROBLEMS

The present inventors have intensely studied for solving the above problems, and as a result, they found that a multilayer electrolyte membrane comprising a laminate of polymer electrolyte membranes at least one of which is an electrolyte membrane which consists of a specific block copolymer or contains it as a main component, can solve the above problems, and completed the invention.

Thus, this invention relates to a multilayer electrolyte membrane for polymer electrolyte fuel cells according to claim 1, consisting of a laminate of at least two polymer electrolyte membranes at least one of which membranes comprises a block copolymer (I) which comprises, as its constituents, a polymer block (A) having as a main unit an aromatic vinyl compound unit and a flexible polymer block (B), and has ion-conducting groups on the polymer block (A).

In view of the object of the invention, it is preferred that at least two of the constitutive electrolyte membranes comprise a block copolymer (I), and, independently from this, it is preferred that when the number of the constitutive electrolyte membranes is two, they have a mutually different ion exchange capacity, and when the number of the constitutive electrolyte membranes is three or more, at least two of them have a mutually different ion exchange capacity. Further, independently from those, it is preferred that at least one of the constitutive electrolyte membranes has an ion exchange capacity of 0.7 meq/g or more and at least one of the constitutive electrolyte membranes has an ion exchange capacity of less than 0.7 meq/g, and, particularly, that at least one of the constitutive electrolyte membranes comprises a block copolymer (I) and has an ion exchange capacity of 0.7 meq/g or more and at least one of the constitutive electrolyte membranes comprises a block copolymer (I) and has an ion exchange capacity of less than 0.7 meq/g.

In the multilayer electrolyte membrane of the invention, polymer block (A) and polymer block (B) in the block copolymer (I) constituting at least one polymer electrolyte membrane have properties that they micro phase separate from each other and polymer block (A) themselves and polymer block (B) themselves gather, respectively, and, since polymer block (A) has ion-conducting groups, ion channels are formed by gathering of polymer block (A) themselves and function as paths of protons. By the presence of polymer block (B), the block copolymer takes on elasticity and becomes flexible as a whole, and in production of membrane electrode assemblies and polymer electrolyte fuel cells, moldability (assembling properties, bonding properties, fastening properties, etc.) is improved. The flexible polymer block (B) is composed of an alkene unit, a conjugated diene unit or the like.
The invention also relates to a membrane electrode assembly and a fuel cell each using the multilayer electrolyte membrane.

### EFFECT OF THE INVENTION

The multilayer electrolyte membrane, membrane electrode assembly and polymer electrolyte fuel cell of the invention is economical, mild to the environment and has not only high ion conductivity but high methanol barrier properties, and display excellent performance particularly in direct methanol fuel cells. The multilayer electrolyte membrane of the invention is also excellent in bonding properties and moldability.

### BEST MODE FOR CARRYING OUT THE INVENTION

The invention is described in detail below. The block copolymer (I) constituting at least one of the constitutive electrolyte membranes of the multilayer electrolyte membrane for polymer electrolyte fuel cells of the invention has, as one of the constituents, a polymer block (A) having as a main unit (=a main repeating unit) an aromatic vinyl compound unit and having at least one ion-conducting group.

The polymer block (A) has an aromatic vinyl compound unit as a main unit. As aromatic vinyl compounds giving this unit, there can be mentioned aromatic vinyl compounds whose α-carbon is tertiary carbon and aromatic vinyl compounds whose α-carbon is quaternary carbon, and any of them can be used, but aromatic vinyl compounds whose α-carbon is quaternary carbon are particularly preferred because they are superior in resistance to radicals formed during power generation (radical resistance). As the aromatic vinyl compounds whose α-carbon is tertiary carbon, there can be mentioned styrene, vinylnaphthalene, vinylanthracene, vinylpyrene, vinylpyridine, etc. As the aromatic vinyl compounds whose α-carbon is quaternary carbon, there can be mentioned aromatic vinyl compounds wherein the hydrogen atom bonded to the α-carbon of aromatic vinyl compounds whose α-carbon is tertiary carbon is replaced with an alkyl group having 1 to 4 carbon atoms (a methyl group, an ethyl group, a n-propyl group, an isopropyl group, a n-butyl group, an isobutyl group, a tert-butyl group or the like), a halogenated alkyl group having 1 to 4 carbon atoms (a chloromethyl group, a 2-chloroethyl group, a 3-chloropropyl group or the like) or a phenyl group or the like.

The hydrogen atoms bonded to the aromatic ring of the aromatic vinyl compound can be replaced with 1 to 3 substituents, and as the substituents, there can be mentioned, each independently, alkyl groups each having 1 to 4 carbon atoms (methyl groups, ethyl groups, n-propyl groups, isopropyl groups, n-butyl groups, isobutyl groups, tert-butyl groups, etc.), halogenated alkyl groups each having 1 to 4 carbon atoms (chloromethyl groups, 2-chloroethyl groups, 3-chloropropyl groups, etc.), etc.

As preferred specific examples of the aromatic vinyl compound whose α-carbon is tertiary carbon, there can be mentioned styrene, p-methylstyrene, 4-tert-butylstyrene, etc. As preferred specific examples of the aromatic vinyl compound whose α-carbon is quaternary carbon, there can be mentioned α-methylstyrene, etc.
These aromatic vinyl compounds can be used alone or in a combination of two or more. When two or more are copolymerized, the form of the copolymerization can be random copolymerization, block copolymerization, graft copolymerization or tapered copolymerization.

Polymer block (A) can contain one or plural other monomer units so long as they do not spoil the effects of the invention. Such other monomers include, for example, conjugated dienes having 4 to 8 carbon atoms (specific examples are the same as in the description of polymer block (B) mentioned later); alkenes having 2 to 8 carbon atoms (specific examples are the same as in the description of polymer block (B) mentioned later); (meth)acrylic esters (methyl (meth)acrylate, ethyl (meth)acrylate, butyl (meth)acrylate, etc.); vinyl esters (vinyl acetate, vinyl propionate, vinyl butyrate, vinyl pivalate, etc.); vinyl ethers (methyl vinyl ether, isobutyl vinyl ether, etc.); etc. The form of the copolymerization of the aromatic vinyl compound with the above other monomers needs to be random copolymerization.

The proportion of the aromatic vinyl compound unit in polymer block (A) is preferably 50 % by mass or more, more preferably 70 % by mass or more, still more preferably 90 % by mass or more, of polymer block (A), in order to form ion channels.

The molecular weight of polymer block (A) is suitably chosen depending on the nature and state, desired performance, other polymer components, etc. of the multilayer electrolyte membrane. When the molecular weight is large, dynamic characteristics such as tensile strength of the multilayer electrolyte membrane tend to be higher, whereas when the molecular weight is small, the electric resistance of the multilayer electrolyte membrane tends to be smaller, and it is important to suitably choose the molecular weight in accordance with necessary performance. Usually, the molecular weight is preferably chosen between 100 and 1,000,000, and more preferably chosen between 1,000 and 100,000, as number average molecular weight in terms of polystyrene.

The block copolymer (I) constituting at least one of the constitutive electrolyte membranes of the multilayer electrolyte membrane for polymer electrolyte fuel cells of the invention has a flexible polymer block (B) besides polymer block (A). Polymer block (A) and polymer block (B) have a property that they go into micro-phase separation and polymer block (A) themselves and polymer block (B) themselves gather, respectively, and since polymer block (A) has ion-conducting groups, ion channels are formed by the gathering of polymer block (A) themselves and serve as paths of protons. By the presence of polymer block (B), the block copolymer takes on elasticity and becomes flexible as a whole, and in production of membrane electrode assemblies and polymer electrolyte fuel cells, moldability (assembling properties, bonding properties, fastening properties, etc.) is improved. Such flexible polymer block (B) is a so-called rubber-like polymer block whose glass transition point or softening point is 50°C or less, preferably 20°C or less, more preferably 10°C or less.

As monomers capable of constituting a unit (=repeating unit) constituting flexible polymer block (B), there can be mentioned alkenes having 2 to 8 carbon atoms; cycloalkenes having 5 to 8 carbon atoms; vinylcycloalkenes having 7 to 10 carbon atoms; conjugated dienes having 4 to 8 carbon atoms; conjugated cycloalkadienes having 5 to 8 carbon atoms; vinylcycloalkenes having 7 to 10 carbon atoms wherein part or all of the carbon-carbon double bonds are hydrogenated; conjugated dienes having 4 to 8 carbon atoms wherein part or all of the carbon-carbon double bonds are hydrogenated; conjugated cycloalkadienes having 5 to 8 carbon atoms wherein part or all of the carbon-carbon double bonds are hydrogenated; (meth)acrylic esters; vinyl esters; vinyl ethers; etc. These can be used alone or in a combination of two or more. When two or more are copolymerized, the form thereof can be random copolymerization, block copolymerization, graft copolymerization or tapered copolymerization. When a monomer used in the (co)polymerization has two carbon-carbon double bonds, any of them can be used in the polymerization, and in the case of a conjugated diene either of 1,2-bond and 1,4-bond can be used in the polymerization, and so long as the glass transition point or softening point is 50°C or less, there is no particular restriction on the proportion between 1,2-bond and 1,4-bond.

When the unit constituting polymer block (B) has a carbon-carbon double bond as in a vinylcycloalkene unit, a conjugated diene unit or a conjugated cycloalkadiene unit, it is preferred that 30 % by mol or more of the carbon-carbon double bonds is hydrogenated, it is further preferred that 50 % by mol or more thereof is hydrogenated, and it is still further preferred that 80 % by mol or more thereof is hydrogenated, in view of enhancement of the power generation performance, heat deterioration resistance, etc. of membrane electrode assemblies using the polymer electrolyte membrane of the invention. The ratio of hydrogenation of the carbon-carbon double bonds can be calculated according to a method generally used, for example, a method of measuring iodine number, ¹H-NMR measurement, or the like.

In view of giving elasticity, and thus good moldability in production of membrane electrode assemblies and polymer electrolyte fuel cells to block copolymers to be obtained, polymer block (B) is preferably a polymer block comprising at least one unit selected from an alkene unit having 2 to 8 carbon atoms; a cycloalkene unit having 5 to 8 carbon atoms, a vinylcycloalkene unit having 7 to 10 carbon atoms; a conjugated diene unit having 4 to 8 carbon atoms, a conjugated cycloalkadiene unit having 5 to 8 carbon atoms; a vinylcycloalkenes unit having 7 to 10 carbon atoms wherein part or all of the carbon-carbon double bonds are hydrogenated; a conjugated diene unit having 4 to 8 carbon atoms wherein part or all of the carbon-carbon double bonds are hydrogenated; and a conjugated cycloalkadiene unit having 5 to 8 carbon atoms wherein part or all of the carbon-carbon double bonds are hydrogenated. From the above viewpoint, polymer block (B) is more preferably a polymer block comprising at least one unit selected from an alkene unit having 2 to 8 carbon atoms; a conjugated diene unit having 4 to 8 carbon atoms; and a conjugated diene unit having 4 to 8 carbon atoms wherein part or all of the carbon-carbon double bonds are hydrogenated. From the above viewpoint, polymer block (B) is still more preferably a polymer block comprising at least one unit selected from an alkene unit having 2 to 6 carbon atoms; a conjugated diene unit having 4 to 8 carbon atoms; and a conjugated diene unit having 4 to 8 carbon atoms wherein part or all of the carbon-carbon double bonds are hydrogenated. In the above, most preferably as the alkene unit is an isobutene unit, and most preferably as the conjugated diene unit is a 1, 3-butadiene unit and/or an isoprene unit.

In the above, alkenes having 2 to 8 carbon atoms include ethylene, propylene, 1-butene, 2-butene, isobutene, 1-pentene, 2-pentene, 1-hexene, 2-hexene, 1-heptene, 2-heptene, 1-octene, 2-octene, etc.; cycloalkenes having 5 to 8 carbon atoms include cyclopentene, cyclohexene, cycloheptene, cyclooctene, etc.; vinylcycloalkenes having 7 to 10 carbon atoms include vinylcyclopentene, vinylcyclohexene, vinylcycloheptene, vinylcyclooctene, etc.; conjugated dienes having 4 to 8 carbon atoms include 1,3-butadiene, 1,3-pentadiene, isoprene, 1,3-hexadiene, 2,4-hexadiene, 2,3-dimethyl-1,3-butadiene, 2-ethyl-1,3-butadiene, 1,3-heptadiene, 1,4-heptadiene, 3,5-heptadiene, etc.; and conjugated cycloalkadienes having 5 to 8 carbon atoms include cyclopentadiene, 1,3-cyclohexadiene, etc.

Polymer block (B) can contain, besides the above monomer unit(s), another monomer unit, for example a unit of an aromatic vinyl compound such as styrene or vinylnaphthalene or a halogen-containing vinyl compound such as vinyl chloride, so long as it does not spoil the purposes of polymer block (B) of giving elasticity to the block copolymer. In this case, the form of the copolymerization of the above monomer with another monomer needs to be random copolymerization. The use amount of such another monomer is preferably less than 50 % by mass, more preferably less than 30 % by mass, still more preferably less than 10 % by mass, based on the total of the above monomer and another monomer.

The structure of the block copolymer comprising polymer block (A) and polymer block (B) as constituents is not particularly limited, and there can be mentioned, as its exmples, an A-B-A triblock copolymer, a B-A-B triblock copolymer, a mixture of an A-B-A triblock copolymer or a B-A-B triblock copolymer with an A-B diblock copolymer, an A-B-A-B tetrablock copolymer, an A-B-A-B-A pentablock copolymer, a B-A-B-A-B pentablock copolymer, an (A-B)ₙX star-shaped copolymer (X represents the residue of a coupling agent), a (B-A)ₙX star-shaped copolymer (X represents the residue of a coupling agent), etc. These block copolymers can be used alone or in a combination of two or more.

The mass ratio of polymer block (A) to polymer block (B) is preferably 95:5 to 5:95, more preferably 90:10 to 10:90 and most preferably 50:50 to 10:90. When this mass ratio is 95:5 to 5:95, it is advantageous for the ion channel formed with polymer block (A) by micro phase separation to be cylindrical or a continuous phase, and practically sufficient ion conductivity is attained, and since the proportion of hydrophobic polymer block (B) gets appropriate and excellent water resistance is attained.

The block copolymer (I) constituting at least one of the constitutive electrolyte membranes of the multilayer electrolyte membrane for polymer electrolyte fuel cells of the invention can contain another polymer block (C) different from polymer block (A) and polymer block (B).

Polymer block (C) is not particularly limited so long as it is a component going into micro phase separation from polymer block (A) and polymer block (B). As monomers capable of constituting polymer block (C), there can, for example, be mentioned aromatic vinyl compounds [styrene, α-methylstyrene, vinylnaphthalene, vinylanthracene, vinylpyrene and so on in each of which hydrogen atom(s) bonded to the aromatic ring can be replaced with 1 to 3 alkyl groups each having 1 to 4 carbon atoms (methyl groups, ethyl groups, n-propyl groups, isopropyl groups, n-butyl groups, isobutyl groups, tert-butyl groups, etc.)]; conjugated dienes having 4 to 8 carbon atoms (specific examples are the same as those mentioned in the description of polymer block (B)); alkenes having 2 to 8 carbon atoms (specific examples are the same as those mentioned in the description of polymer block (B)); (meth)acrylic esters (methyl (meth)acrylate, ethyl (meth)acrylate, butyl (meth)acrylate, etc.); vinyl esters (vinyl acetate, vinyl propionate, vinyl butyrate, vinyl pivalate, etc.); vinyl ethers (methyl vinyl ether, isobutyl vinyl ether, etc.); etc. The number of monomers constituting polymer block (C) may be one or plural.

When polymer block (C) micro phase separates from polymer block (A) and polymer block (B), has substantially no ionic groups and is made to have a function of acting as a restraining phase, the multilayer electrolyte membrane of the invention having such polymer block (C) tends to be excellent in dimensional stability, shape and form stability, durability, and dynamic characteristics under a wet environment. In this case, as preferred examples of monomers constituting polymer block (C), there can be mentioned the above-mentioned aromatic vinyl compounds. It is also possible to give the above functions by making polymer block (C) crystalline.

When the aromatic vinyl compound unit is relied on for the above functions, the proportion of the aromatic vinyl compound unit in polymer block (C) is preferably 50 % by mass or more, more preferably 70 % by mass or more and still more preferably 90 % by mass or more of polymer block (C). Further, from the same viewpoint as above, it is desirable that units other than the aromatic vinyl compound unit contained in polymer block (C) are in the state of random copolymerization.

In view of micro-phase separating polymer block (C) from polymer block (A) and polymer block (B) and at the same time making it function as a restraining phase, as particularly preferred examples of polymer block (C), there can be mentioned a polystyrene-type block such as a polystyrene block, a poly-p-methylstyrene block or a poly-p-(t-butyl)styrene block; a copolymer block consisting of two or more of styrene, p-methylstyrene and p-(t-butyl)styrene in an optional mutual proportion; a crystalline hydrogenated 1,4-polybutadiene block; a crystalline polyethylene block; a crystalline polypropylene block, etc.

As the forms of the block copolymer in the case of containing polymer block (C) used in the invention, there can be mentioned an A-B-C triblock copolymer, an A-B-C-A tetrablock copolymer, an A-B-A-C tetrablock copolymer, a B-A-B-C tetrablock copolymer, an C-B-GA tetrablock copolymer, an A-B-C-B tetrablock copolymer, a C-A-B-A-C pentablock copolymer, a C-B-A-B-C pentablock copolymer, an A-C-B-C-A pentablock copolymer, an A-C-B-A-C pentablock copolymer, an A-B-C-A-B pentablock copolymer, an A-B-C-A-C pentablock copolymer, an A-B-C-B-C pentablock copolymer, an A-B-A-B-C pentablock copolymer, an A-B-A-C-B pentablock copolymer, a B-A-B-A-C pentablock copolymer, a B A-B-C-A pentablock copolymer, a B-A-B-C-B pentablock copolymer, a C-A-C-B-C pentablock copolymer, etc.

When the block copolymer (I) constituting at least one of the constitutive electrolyte membranes of the multilayer electrolyte membrane for polymer electrolyte fuel cells of the invention contains polymer block (C), the proportion of polymer block (C) in the block copolymer is preferably 75 % by mass or less, more preferably 70 % by mass or less and still more preferably 65 % by mass or less.

The number average molecular weight of the block copolymer (I) constituting at least one of the constitutive electrolyte membranes of the multilayer electrolyte membrane for polymer electrolyte fuel cells of the invention, in a state that an ion-conducting group is not introduced, is not particularly limited, but, usually, is preferably 10,000 to 2,000,000, more preferably 15,000 to 1,000,000 and still more preferably 20,000 to 500,000 as number average molecular weight in terms of polystyrene.

The block copolymer (I) constituting at least one of the constitutive electrolyte membranes of the multilayer electrolyte membrane for polymer electrolyte fuel cells of the invention needs to have ion-conducting groups on polymer block (A). When ion conductivity is referred to in the invention, the ion includes protons, etc. The ion-conducting groups are not particularly limited so long as they are such groups that a membrane electrode assembly produced using the multilayer electrolyte membrane can attain sufficient ion conductivity, but above all, a sulfonic acid group or a phosphonic acid group or their salts represented by -SO₃M or -PO₃HM wherein M represents a hydrogen atom, an ammonium ion or an alkali metal ion, can be used preferably. As the ion-conducting group, a carboxyl group or its salts can also be used. The reason why polymer block (A) is chosen as the site of introduction of ion-conducting groups is that introduction of ion-conducting groups is easy and formation of ion channels is made to be easy.

As to the position of introduction of the ion-conducting groups into polymer block (A), there is no particular restriction, and they can be introduced either into the aromatic vinyl compound unit as the main constituent or into the afore-mentioned other monomer units, but in view of making formation of ion channels easy and inhibition of methanol crossover, it is preferred to introduce the ion-conducting groups into the aromatic ring of the aromatic vinyl compound unit.

When polymer block (A) in which ion-conducting groups are introduced is composed of an aromatic vinyl compound unit wherein the hydrogen atom bonded to the α-carbon is replaced with an alkyl group having 1 to 4 carbon atoms, for example an α-methylstyrene unit, the polarity of polymer block (A) becomes lower and hydrophobicity inside the ion channels which polymer block (A) form as a result of microphase separation is heightened and, as a result, it tends to be easy to inhibit methanol crossover, compared to the case where polymer block (A) is composed of an aromatic vinyl compound unit whose α-carbon is tertiary carbon, for example a styrene unit.

Further, also when an aromatic vinyl compound unit wherein the hydrogen atom(s) bonded to the aromatic ring of the aromatic vinyl compound is/are replaced with 1 to 3 alkyl groups having 1 to 4 carbon atoms, for example an p-methylstyrene unit is a main unit, the polarity of polymer block (A) becomes lower and hydrophobicity inside the ion channels which polymer block (A) form as a result of microphase separation is heightened and, as a result, it tends to be easy to inhibit methanol crossover, compared to the case where an aromatic vinyl compound unit whose aromatic ring is not substituted is a main unit. When another monomer which has a lower polarity than the above substituted styrenes have is copolymerized, it tends to be easier to inhibit methanol crossover.

Polymer block (A) having ion-conducting groups which is a constituent of the block copolymer (I) constituting at least one of the constitutive electrolyte membranes of the multilayer electrolyte membrane for polymer electrolyte fuel cells of the invention can be crosslinked, in such a range that the effects of the invention are not spoiled. By introduction of crosslinking, the dimensional stability and shape and form stability of the membrane tend to be increased and methanol crossover tends to be inhibited. As a means for crosslinking, a heat crosslinking method, etc. can be mentioned. In the heat crosslinking method, heat crosslinking becomes possible by copolymerizing a monomer having a heat crosslinking site into polymer block (A). As a suitable monomer, p-methylstyrene, etc. can be exemplified.

Processes for producing block copolymer (I) constituting at least one of the constitutive electrolyte membranes of the multilayer electrolyte membrane for polymer electrolyte fuel cells of the invention are mainly classified into two processes. Namely, they are (1) a process which comprises producing a block copolymer not having ion-conducting groups and then bonding an ion-conducting group, and (2) a process which comprises producing a block copolymer using a monomer having an ion-conducting group.

The first process is described below.
Depending on the kind, molecular weight, etc. of monomer(s) constituting polymer block (A) or (B), the process for producing polymer block (A) or (B) is appropriately chosen from a radical polymerization method, an anionic polymerization method, a cationic polymerization method, a coordination polymerization method and so on, but in view of industrial easiness, a radical polymerization method, an anionic polymerization method or a cationic polymerization method is preferably chosen. Particularly, in view of molecular weight, molecular weight distribution, the structure of the polymer, easiness of bond to polymer block (B) composed of flexible component(s) or polymer block (A) and so on, a so-called living polymerization method is preferred, and, specifically, a living radical polymerization method, a living anionic polymerization method or a living cationic polymerization method is preferred.

As specific examples of the production process, a process for producing a block copolymer having its components polymer block (A) composed of polystyrene and polymer block (B) composed of poly (conjugated diene); a process for producing a block copolymer having its components polymer block (A) composed of polystyrene and polymer block (B) composed of polyisobutene; a process for producing a block copolymer having its components polymer block (A) composed of poly (α-methylstyrene) and polymer block (B) composed of poly (conjugated diene); and a process for producing a block copolymer having its components polymer block (A) composed of poly (α-methylstyrene) and polymer block (B) composed of polyisobutene are described below. In these cases, in view of industrial easiness, molecular weight, molecular weight distribution, easiness of bond between polymer block (A) and polymer block (B) and so on, it is preferred to produce these block copolymers according to a living anionic polymerization method or a living cationic polymerization method, and specific synthetic examples as follows can be utilized.

In preparation by an anionic polymerization method of block copolymer (I) constituting at least one of the constitutive electrolyte membranes of the multilayer electrolyte membrane for polymer electrolyte fuel cells of the invention, when a styrene unit which is an aromatic vinyl compound unit whose α-carbon is tertiary carbon, or a styrene derivative unit wherein the aromatic ring is substituted with an alkyl group is made to be a main unit of polymer block (A), a known method can be adopted such as
(1) a process of obtaining an A-B-A block copolymer by polymerizing styrene or such a styrene derivative in a cyclohexane solvent under a temperature condition of 20 to 100 °C using an anionic polymerization initiator, polymerizing a conjugated diene, and successively polymerizing styrene or such a styrene derivative, or
(2) a process of obtaining an A-B-A block copolymer by polymerizing styrene or such a styrene derivative in a cyclohexane solvent under a temperature condition of 20 to 100 °C using an anionic polymerization initiator, polymerizing a conjugated diene, and then adding a coupling agent such as phenyl benzoate.

In preparation by an anionic polymerization method of block copolymer (I) constituting at least one of the constitutive electrolyte membranes of the multilayer electrolyte membrane for polymer electrolyte fuel cells of the invention, when an α-methylstyrene unit which is a typical example of an aromatic vinyl compound unit whose α-carbon is quaternary carbon is made to be a main unit of polymer block (A), a method can be adopted such as
(3) a process of obtaining an A-B-A block copolymer by polymerizing a conjugated diene in a tetrahydrofuran solvent using a dianionic initiator, and successively polymerizing α-methylstyrene under a temperature condition of -78 °C (Macromolecules, (1969), 2(5), 453-458),
(4) a process of obtaining an (A-B)ₙX block copolymer by bulk polymerizing α-methylstyrene using an anionic initiator, successively polymerizing a conjugated diene, and then carrying out a coupling reaction using a coupling agent such as tetrachlorosilane (Kautsch. Gummi, Kunstst., (1984), 37(5), 377-379; Polym. Bull., (1984), 12, 71-77),

(5) a process of obtaining an A-B-A block copolymer by polymerizing α-methylstyrene of a concentration of 5 to 50 % by mass in a nonpolar solvent in the presence of a polar compound of a concentration of 0.1 to 10 % by mass at a temperature of -30°C to 30°C using an organic lithium compound as an initiator, polymerizing a conjugated diene with the resulting living polymer, and then adding a coupling agent such as phenyl benzoate, or
(6) a process of obtaining an A-B-C block copolymer by polymerizing α-methylstyrene of a concentration of 5 to 50 % by mass in a nonpolar solvent in the presence of a polar compound of a concentration of 0.1 to 10 % by mass at a temperature of -30°C to 30°C using an organic lithium compound as an initiator, polymerizing a conjugated diene with the resulting living polymer, and then polymerizing a monomer to constitute a polymer block (C) with the resulting living polymer of the block copolymer consisting of the α-methylstyrene polymer block and the conjugated diene polymer block.

In the case of producing a block copolymer containing a polymer block (A) comprising poly (α-methylstyrene) and a polymer block (B) comprising a poly (conjugated diene) as constituents, the methods of (5) and (6) are preferred among the above specific preparation methods of a block copolymer, and the method of (5) is further preferred.

In preparation by a cationic polymerization method of block copolymer (I) constituting at least one of the constitutive electrolyte membranes of the multilayer electrolyte membrane for polymer electrolyte fuel cells of the invention, when a styrene unit which is an aromatic vinyl compound unit whose α-carbon is tertiary carbon is made to be a main unit of polymer block (A), a method such as (7) a process of obtaining an A-B-A block copolymer by cationically polymerizing isobutene in a mixed solvent of a halogenated hydrocarbon and a hydrocarbon in the presence of a Lewis acid at a temperature of -78°C using a bifunctional halide initiator, and then polymerizing styrene (WO 98/14518) can be adopted;

and when an α-methylstyrene unit which is an aromatic vinyl compound unit whose α-carbon is quaternary carbon is made to be a main unit of polymer block (A), a method can be adopted such as
(8) a process of obtaining an A-B-A block copolymer by cationically polymerizing isobutene in a mixed solvent of a halogenated hydrocarbon and a hydrocarbon in the presence of a Lewis acid at a temperature of -78°C using a bifunctional halide initiator, adding diphenylethylene, further adding the Lewis acid, and then polymerizing α-methylstyrene (Macromolecules, (1995), 28, 4893-4898), or (9) a process of obtaining an A-B-A block copolymer by polymerizing α-methylstyrene in a mixed solvent of a halogenated hydrocarbon and a hydrocarbon in the presence of a Lewis acid at a temperature of -78°C using a monofunctional halide initiator, further adding the Lewis acid, polymerizing isobutene, and then carrying out a coupling reaction using a coupling agent such as 2,2-bis-[4-(1-phenylethenyl)phenyl]propane (Polym. Bull., (2000), 45, 121-128).

A process for bonding an ion-conducting group to the resulting block copolymer (I) is described below.
First, a process for introducing a sulfonic acid group into the resulting block copolymer (I) is described. Sulfonation can be conducted by a known sulfonation method. As such a method, there can be exemplified a process of preparing a solution or suspension of the block copolymer in an organic solvent, and then adding a sulfonating agent and conducting mixing, a process of directly adding a gaseous sulfonating agent to the block copolymer, and the like.

As the sulfonating agent to be used, there can be exemplified sulfuric acid, a mixture system of sulfuric acid and an aliphatic acid anhydride, chlorosulfonic acid, a mixture system of chlorosulfonic acid and trimethylsilyl chloride, sulfur trioxide, a mixture system of sulfur trioxide and triethyl phosphate, and, further, an aromatic organic sulfonic acid represented by 2,4,6-trimethylbenzenesulfonic acid, and so on. Further, as the organic solvent to be used, there can be exemplified a halogenated hydrocarbon such as methylene chloride, a straight-chain aliphatic hydrocarbon such as hexane, a cyclic aliphatic hydrocarbon such as cyclohexane, and so on, and they can be used also with an appropriate selection from plural combinations thereof, if necessary.

Next, a process for introducing a phosphonic acid group into the resulting block copolymer (I) is described. Phosphonation can be conducted by a known phosphonation method. Specifically, there can, for example, be mentioned a process of preparing a solution or suspension of the block copolymer in an organic solvent, reacting the copolymer with chloromethyl ether or the like in the presence of anhydrous aluminum chloride to introduce halomethyl groups into the aromatic rings, reacting the resulting copolymer with phosphorus trichloride and anhydrous aluminum chloride added, and then conducting hydrolysis reaction to introduce phosphonic acid groups; and so on. There can further be exemplified a process of adding phosphorus trichloride and anhydrous aluminum chloride to the copolymer and reacting them to introduce phosphinic acid groups into the aromatic rings, and then oxidizing the phosphinic acid groups into phosphonic acid groups with nitric acid; and so on.

The second process for producing a block copolymer (I) constituting at least one of the constitutive electrolyte membranes of the multilayer electrolyte membrane for polymer electrolyte fuel cells of the invention is a process of producing the block copolymer using at least one monomer having an ion-conducting group.
As the monomer having an ion-conducting group, a monomer wherein an ion-conducting group is bonded to an aromatic vinyl compound is preferred. Specifically, there can be mentioned styrenesulfonic acid, α-alkyl- styrenesulfonic acids, vinylnaphthalenesulfonic acid, α-alkyl-vinylnaphthalenesulfonic acids, vinylanthracenesulfonic acid, α-alkyl-vinylanthracenesulfonic acids, vinylpyrenesulfonic acid, α-alkyl-vinylpyrenesulfonic acids, styrenephosphonic acid, α-alkyl-styrenephosphonic acids, vinylnaphthalenephosphonic acid, α-alkyl-vinylnaphthalenephosphonic acids, vinylanthracenephosphonic acid, α-alkyl-vinylanthracenephosphonic acids, vinylpyrenephosphonic acid, α-alkyl-vinylpyrenephosphonic acids, etc. Among them, in view of industrial general-purpose properties, easiness of polymerization and the like, o-, m- or p-styrenesulfonic acid and α-alkyl-o-, m- or p-styrenesulfonic acids are particularly preferred.

As the monomer having an ion-conducting group, a monomer wherein an ion-conducting group is bonded to a conjugated diene compound can also be used. Specifically, there can be mentioned 1,3-butadiene-1-sulfonic acid, 1,3-butadiene-2-sulfonic acid, isoprene-1-sulfonic acid, isoprene-2-sulfonic acid, 1,3-butadiene-1-phosphonic acid, 1,3-butadiene-2-phosphonic acid, isoprene-1-phosphonic acid, isoprene-2-phosphonic acid, etc.

As the monomer having an ion-conducting group, there can also be used vinylsulfonic acid, α-alkyl-vinylsulfonic acids, vinylalkylsulfonic acids, α-alkyl-vinylalkylsulfonic acids, vinylphosphonic acid, α-alkyl-vinylphosphonic acids, vinylalkylphosphonic acids, α-alkyl-vinylalkylphosphonic acids, etc. Among them, vinylsulfonic acid and vinylphosphonic acid are preferred.
As the monomer having an ion-conducting group, there can further be used a (meth)acrylic monomer to which a cation-conducting group is bonded. Specifically, methacrylic acid, acrylic acid, 2-acrylamido-2-methyl-1-propanesulfonic acid, etc. can be mentioned.

The ion-conducting group can be introduced in the form of a salt neutralized with a proper metal ion (e.g., an alkali metal ion) or a counter ion (e.g., an ammonium ion). For example, by producing a polymer using sodium o-, m- or p-styrenesulfonate or sodium α-methyl-o-, m- or p-styrenesulfonate, a desired ion-conducting group can be introduced. A block copolymer wherein the sulfonic acid group is converted to a salt form can also be obtained by ion exchange using a suitable method.

The multilayer polymer electrolyte membrane of the invention can contain, besides membrane(s) comprising block copolymer (I), a membrane comprising at least one of other ion-conducting group-containing polymers. As examples of such other ion-conducting group-containing polymers, there can be mentioned ionomers such as polystyrenesulfonic acid, poly (trifluorostyrene) sulfonic acid, polyvinylphosphonic acid, polyvinylcarboxylic acid and polyvinylsulfonic acid; polymers obtained by introducing at least one of sulfonic acid groups, phosphonic acid groups and carboxyl groups into perfluorocarbon polymers such as polytetrafluoroethylene, tetrafluoroethylene/ethylene copolymers, tetrafluoroethylene/perfluoro (alkylvinyl ether) copolymers, tetraffuoroethylene/hexafluoropropylene copolymers, polyvinylidene fluoride; polymers obtained by introducing at least one of sulfonic acid groups, phosphonic acid groups and carboxyl groups into engineering plastics such as polysulfone, polyethersulfone, polyphenylene oxide, polyphenylene sulfide, polyphenylene sulfide sulfone, polyparaphenylene, polyarylene polymers, polyaryl ketone, polyether ketone, polybenzoxazole, polybenzothiazole and polyimide; etc. In the above, polysulfone, polyethersulfone and polyether ketone are general terms for polymers having sulfone bonds, ether bonds or ketone bonds in the molecular chain, and include polyether ketone ketone, polyether ether ketone, polyether ether ketone ketone, polyether ketone sulfone, etc. Such other ion-conducting group-containing polymers may also be ion exchange resins containing at least one of sulfonic acid groups, phosphonic acid groups and carboxyl groups.

Each polymer electrolyte membrane constituting the multilayer polymer electrolyte membrane of the invention can, if necessary, contain, in addition to the block copolymer (I) or above-mentioned other ion-conducting group-containing polymers, a softening agent, in such a range that the effects of the invention are not spoiled. As the softening agent, there are petroleum-type softening agents such as paraffin-, naphthene- or aroma-process oils; paraffins; vegetable oil-type softening agents; plasticizers; etc., and they can be used alone or in a combination of two or more.

Each polymer electrolyte membrane constituting the multilayer polymer electrolyte membrane of the invention can, if necessary, further contain, in such a range that the effects of the invention are not spoiled, various additives, for example, phenol-type stabilizers, sulfur-type stabilizers, phosphorus-type stabilizers, light stabilizers, antistatic agents, mold release agents, flame retardants, foaming agents, pigments, dyes, brighteners, carbon fiber, etc. alone in a combination of two or more. As specific examples of the stabilizers, there can be mentioned phenol-type stabilizers such as 2,6-di-t-butyl-p-cresol, pentaerythrityl tetrakis [3- (3,5-di-t-butyl-4-hydroxyphenyl)propionate], 1,3,5-trimethyl-2,4,6-tris(3,5-di-t-butyl-4-hydroxybenzyl)benzene, octadecyl 3-(3,5-di-t-butyl-4-hydroxyphenyl) propionate, triethylene glycol bis[3-(3-t-butyl-5-methyl-4-hydroxyphenyl)propionate], 2,4-bis(n-octylthio)-6-(4-hydroxy-3,5-di-t-butylanilino)-1,3,5-triazine, 2,2-thio-diethylenebis [3-(3,5-di-t-butyl-4-hydroxyphenyl)propionatel, N,N'-hexamethylenebis (3,5-di-t-butyl-4-hydroxy-hydrocinnamide), 3,5-di-t-butyl-4-hydroxy-benzylphosphonate diethyl ester, tris- (3,5-di-t-butyl-4-hydroxybenzyl) isocyanurate and 3,9-bis{2- [3-(3-t-butyl-4-hydroxy-5-methylphenyl)propionyloxy]-1,1-dimethylethyl}-2,4,8,10-tetraoxaspiro [5,5]undecane; sulfur-type stabilizers such as pentaerythrityl tetrakis (3-laurylthiopropionate), distearyl 3,3'-thiodipropionate, dilauryl 3,3'-thiodipropionate and dimyristyl 3,3'-thiodipropionate; phosphorus-type stabilizers such as tris(nonylphenyl) phosphite, tris(2,4-di-t-butylphenyl) phosphite, distearyl pentaerythritol diphosphite, bis (2,6-di-t-butyl-4-methylphenyl) pentaerythritol diphosphite ; etc. These stabilizers can be used alone or in a combination of two or more.

Each polymer electrolyte membrane constituting the multilayer polymer electrolyte membrane of the invention can, if necessary, further contain, in such a range that the effects of the invention are not spoiled, an inorganic filler. As specific examples of the inorganic filler, there can be mentioned talc, calcium carbonate, silica, glass fiber, mica, kaolin, titanium oxide, montmorillonite, alumina, etc.

The content of the above-mentioned block copolymer or other ion-conducting group-containing polymers in each polymer electrolyte membrane constituting the multilayer polymer electrolyte membrane of the invention is preferably 50 % by mass or more, more preferably 70 % by mass or more and further more preferably 90 % by mass or more, in view of ion conductivity.

It is preferred in view of making the electric resistance at the interface(s) of the multilayer membrane smaller that at least two of the polymer electrolyte membranes constituting the multilayer polymer electrolyte membrane of the invention comprise a block copolymer (I).

It is preferred for making the multilayer polymer electrolyte membrane of the invention have both high ion conductivity and high methanol barrier properties that at least two of the polymer electrolyte membranes constituting the multilayer membrane have mutually different ion exchange capacities. Namely, it is preferred that when the number of the constitutive electrolyte membranes is two, they have mutually different ion exchange capacities, and when the number of the constitutive electrolyte membranes is three or more, at least two of them have mutually different ion exchange capacities.

In order to attain enough ion conductivity for use as a multilayer polymer electrolyte membrane for direct methanol fuel cells, the ion exchange capacity of the electrolyte membrane having a larger ion exchange capacity is preferably 0.70 meq/g or more, and more preferably 0.80 meq/g or more. As to the upper limit of the ion exchange capacity, since too large ion exchange capacity tends to heighten hydrophilicity and make water resistance inadequate, it is preferably 3.0 meq/g or less. Further, in order to attain enough methanol barrier properties for use as a multilayer polymer electrolyte membrane for direct methanol fuel cells, the ion exchange capacity of the electrolyte membrane having a smaller ion exchange capacity is preferably less than 0.70 meq/g, and more preferably 0.65 meq/g or less. As to the lower limit of the ion exchange capacity, since too small ion exchange capacity tends to make ion conductivity bad, it is preferably 0.3 meq/g or more.

Further, in order to make the multilayer electrolyte membrane of the invention one having both sufficient ion conductivity and sufficient methanol barrier properties for use as a multilayer polymer electrolyte membrane for direct methanol fuel cells, a difference in ion exchange capacity between the electrolyte membrane having a larger ion exchange capacity and the electrolyte membrane having a smaller ion exchange capacity is preferably 0.03 meq/g or more, more preferably 0.05 meq/g or more and still more preferably 0.1 meq/g or more.

From the above viewpoint, as to the degree of sulfonation or phosphonation in block copolymer (I), in the case of the electrolyte membrane having a larger ion exchange capacity, it is preferred to carry out the sulfonation or phosphonation so that its ion exchange capacity becomes preferably 0.70 meq/g or more, and more preferably 0.80 meq/g or more and 3.0 meq/g or less; and in the case of the electrolyte membrane having a smaller ion exchange capacity, it is preferred to carry out the sulfonation or phosphonation so that its ion exchange capacity becomes preferably less than 0.70 meq/g, and more preferably 0.65 meq/g or less and 0.3 meq/g or more. The ion exchange capacity of the sulfonated or phosphonated block copolymer, or an electrolyte membrane containing the same; and sulfonation proportion or phosphonation proportion of the block copolymer can be calculated using analytical method(s) such as an acid value titration method, infrared spectroscopy, measurement of nuclear magnetic resonance spectrum (¹H-NMR spectrum) and/or the like.

It is preferred in view of inhibition of methanol crossover that at least two of the polymer electrolyte membranes constituting the multilayer polymer electrolyte membrane of the invention comprise block copolymer (I), and that at least one of the block copolymer (I)-containing electrolyte membranes has an ion exchange capacity of 0.70 meq/g or more and at least one of the block copolymer (I)-containing electrolyte membranes has an ion exchange capacity of less than 0.70 meq/g.

In view of necessary performance, membrane strength, handling properties, etc. as an electrolyte membrane for fuel cells, the thickness of the multilayer polymer electrolyte membrane of the invention is preferably on the order of 5 to 500 µm. When the membrane thickness is less than 5 µm, the mechanical strength of the membrane and the barrier properties of a fuel such as hydrogen, oxygen or methanol on the membrane tend to be insufficient. Conversely, when the membrane thickness goes beyond 500 µm and is too thick, the electric resistance of the membrane becomes large and sufficient proton conductivity is not attained, and as a result, the power generation characteristics of the cells tends to be lowered. The membrane thickness is more preferably 10 to 300 µm.

In view of attaining the characteristics of the invention more effectively, the proportion of the total thickness of all electrolyte membranes comprising block copolymer (I) to the thickness of the multilayer polymer electrolyte membrane of the invention is preferably 1 % or more, more preferably 3 % or more and still more preferably 5 % or more.

Although there is no particular restriction on the layer constitution of the multilayer polymer electrolyte membrane of the invention, it is preferred in view of heightening electric bonding properties between the membrane and the electrode and improving cell characteristics that the ion exchange capacity of the outermost polymer electrolyte layer is higher than that of any of inner polymer electrolyte layers. As a preferred example, there can be mentioned a multilayer polymer electrolyte membrane having such a structure that an outer layer having a higher ion exchange capacity is placed on both sides of an inner layer having a lower ion exchange capacity.

As to a process for preparing the multilayer polymer electrolyte membrane of the invention, any process can be adopted so long as it is a usual process for such preparation. For example, in preparation of one of polymer electrolyte membranes constituting the multilayer polymer electrolyte membrane of the invention, there can be used a process which comprises mixing the above block copolymer or another ion-conducting group-containing polymer, or the block copolymer or another ion-conducting group-containing polymer and additives as mentioned above with a suitable solvent to dissolve or suspend the block copolymer or said another ion-conducting group-containing polymer, casting the resulting solution or suspension onto a sheet material such as PET or glass or applying it on such a material using a coater, an applicator or the like, and then removing the solvent under an appropriate condition to obtain an electrolyte membrane having a desired thickness; a process of making a membrane using a known method such as hot press forming, roll thermoforming or extrusion molding; etc.
Formation as a second layer of an electrolyte membrane the same as or different from the first one on the electrolyte membrane layer as the first layer can be made by mixing the above block copolymer or another ion-conducting group-containing polymer, or the block copolymer or another ion-conducting group-containing polymer and additives as mentioned above with a suitable solvent to dissolve or suspend the block copolymer or said another ion-conducting group-containing polymer, applying the resulting solution or suspension on the first layer, and drying it. When a multilayer membrane consisting of 3 layers or more is prepared, the same procedure as above is repeated to make application and drying, and thereby obtain a third or further layer.
It is further possible to prepare a multilayer polymer electrolyte membrane by press bonding the same or mutually different electrolyte membranes themselves obtained as mentioned above by roll thermoforming or the like.

A solvent to be used in a case as mentioned above is not particularly restricted so long as it does not destroy the structure of the block copolymer or said another ion-conducting group-containing polymer, and is capable of preparing a solution having a viscosity of the order to make its casting or application possible. Specifically, there can be exemplified halogenated hydrocarbons such as methylene chloride; aromatic hydrocarbons such as toluene, xylene and benzene; straight-chain aliphatic hydrocarbons such as hexane and heptane; cyclic aliphatic hydrocarbons such as cyclohexane; ethers such as tetrahydrofuran; and alcohols such as methanol, ethanol, propanol, isopropanol, butanol and isobutyl alcohol; and mixed solvents thereof, etc. According to the constitution, molecular weight, ion exchange capacity, etc. of the block copolymer or said another ion-conducting group-containing polymer, one or a combination of two or more can appropriately be chosen and used among the solvents exemplified above.

The condition of removal of the solvent used can optionally be chosen so long as it is a condition to make it possible to completely remove the solvent at a temperature lower than a temperature at which the ion-conducting groups such as sulfonic acid groups in the block copolymer or said another ion-conducting group-containing polymer drop off. In order to attain desired physical properties, it is possible to combine plural temperatures optionally and/or combine conditions of under draft and under vacuum and so on optionally. Specifically, there can be exemplified a process of conducting preliminary drying under a vacuum condition of room temperature to 60°C for several hours and then conducting drying under a vacuum condition of 100°C or more, preferably 100 to 120°C for 12 hours or so to remove the solvent; a process of removing the solvent under a drying condition of under draft of 60 to 140°C for the order of several minutes to several hours; etc., but the process for removal of the solvent is not limited thereto.

A membrane electrode assembly using the multilayer polymer electrolyte membrane of the invention is described below. As to production of the membrane electrode assembly, there is no particular restriction, and a known process can be applied. For example, there can be mentioned a process of applying a catalyst paste containing an ion-conducting binder onto a gas diffusion layer by a printing method or a spraying method and drying the paste to form an assembly of the catalyst layer and the gas diffusion layer, and then bonding a pair of the assemblies, with each catalyst layer being made to be inside, to both sides of the multilayer polymer electrolyte membrane by a hot press or the like; or a process of applying the catalyst paste onto both sides of the multilayer polymer electrolyte membrane by a printing method or a spraying method and drying the paste to form a catalyst layer, and then press bonding a gas diffusion layer onto each catalyst layer by a hot press or the like. As still another production process, there is a process of applying a solution or suspension containing an ion-conducting binder onto both sides of the multilayer polymer electrolyte membrane and/or onto the surfaces of the catalyst layers in a pair of gas diffusion electrodes, sticking the multilayer electrolyte membrane and the surfaces of the catalyst layers together, and then bonding them by thermocompression bonding or the like. In this case, the solution or suspension can be applied onto any one or both of the multilayer electrolyte membrane and the surfaces of the catalyst layers. As further still another production process, there is a process of applying the above catalyst paste onto a film substrate such as one made of polytetrafluoroethylene (PTFE) and drying the paste to form a catalyst layer, transferring a pair of the catalyst layers on the film substrates onto both sides of the multilayer polymer electrolyte membrane by thermocompression bonding, peeling off the film substrates to obtain an assembly of the multilayer electrolyte membrane and the catalyst layer, and then press bonding a gas diffusion layer onto each catalyst layer. In these methods, it is possible to conduct the above process in a state that the ion-conducting group is made to a salt with a metal such as Na, and restore the proton type by acid treatment after the bonding.

As the ion-conducting binder constituting the membrane electrode assembly, there can, for example, be used an ion-conducting binder composed of an existing perfluorocarbonsulfonic acid-type polymer such as "Nafion" (registered trade mark, made by Dupont Co.) or "Gore-select" (registered trade mark, made by Gore Co.); an ion-conducting binder composed of a sulfonated polyether sulfone or a sulfonated polyether ketone; an ion-conducting binder composed of a polybenzimidazole impregnated with phosphoric acid or sulfuric acid; or the like. It is also possible to make an ion-conducting binder of an electrolyte constituting the multilayer polymer electrolyte membrane of the invention. For further heightening the adhesion between the multilayer electrolyte membrane and the gas diffusion electrode, it is preferred to use an ion-conducting binder having a structure analogous to the polymer electrolyte forming the layer contacting with the gas diffusion electrode.

As to the constitutive materials of the catalyst layer in the membrane electrode assembly, there is no particular restriction as an electrically conductive material /catalyst support, and, for example, a carbon material is mentioned. As the carbon material, there can be mentioned carbon blacks such as furnace black, channel black and acetylene black; activated carbon; graphite, etc., and these can be used alone or as a mixture of two or more. As the catalyst metal, any metal can be used so long as it is a metal which promotes oxidation reaction of the fuel such as hydrogen or methanol and reduction reaction of oxygen, and there can, for example, be mentioned platinum, gold, silver, palladium, iridium, rhodium, ruthenium, iron, cobalt, nickel, chromium, tungsten, manganese, etc., and their alloys such as a platinum-ruthenium alloy. Among them, platinum or a platinum alloy is used in many cases. The particle size of a metal as the catalyst is, usually, 10 to 300 angstroms. It is advantageous in view of costs to support such a catalyst on an electrically conductive material / catalyst support such as carbon because of less use amount of the catalyst. If necessary, it is possible to make the catalyst layer contain a water repellent. As the water repellent, there can, for example, be mentioned various thermoplastic resins such as polytetrafluoroethylene, polyvinylidene fluoride, a styrene-butadiene copolymer and a poly (ether ether ketone).

The gas diffusion layer of the membrane electrode assembly is composed of a material having electrical conductivity and gas permeability, and as the material, there can, for example, be mentioned a porous material composed of carbon fiber such as carbon paper or carbon cloth. Such a material can be subjected to water repellent treatment for heightening water repellency.

By inserting a membrane electrode assembly obtained by a process as mentioned above between electrically conductive separator materials having both roles of separation of the electrode chambers and as a path for supplying gas to the electrode, a polymer electrolyte fuel cell can be obtained. The membrane electrode assembly of the invention can be used as a membrane electrode assembly for polymer electrolyte fuel cells such as a pure hydrogen one using hydrogen as the fuel gas, a methanol-reforming one using hydrogen obtained by reforming methanol, a natural gas-reforming one using hydrogen obtained by reforming natural gas, a gasoline-reforming one using hydrogen obtained by reforming gasoline and a direct methanol one wherein methanol is used directly.

A fuel cell using the multilayer polymer electrolyte membrane of the invention is economical, mild to the environment and has not only high ion conductivity but high methanol barrier properties, and attains excellent power generation performance particularly in direct methanol fuel cells.

### EXAMPLES

The present invention is further specifically described below through referential examples, preparation examples, examples and comparative examples and performance tests as a proton-conducting electrolyte membrane for polymer electrolyte fuel cells (ion exchange capacity, electric resistance of the membrane, methanol permeation rate, evaluation of power generation performance of single cells for fuel cells), but the invention is not limited thereto.

### Referential example 1

### Production of a block copolymer composed of poly (α-methylstyrene) block (polymer block (A)) and hydrogenated polybutadiene block (polymer block (B))

In a similar process to a previously reported process (WO 02/40611), a poly (α-methylstyrene)-b-polybutadiene-b-poly (α-methylstyrene) triblock copolymer (hereinafter abbreviated as mSBmS) was synthesized. The number average molecular weight (GPC measurement, in terms of polystyrene) of the resulting mSBmS was 48,150, and the amount of the 1,4-bond determined by ¹H-NMR measurement was 60 % and the content of the α-methylstyrene unit also determined by the ¹H-NMR measurement was 41.3 % by mass. Further, it was revealed by composition analysis through ¹H-NMR spectrum measurement that α-methylstyrene was not substantially copolymerized into the polybutadiene block.
A solution of the synthesized mSBmS in cyclohexane was prepared, the solution was put in a pressure proof vessel whose atmosphere had sufficiently been replaced with nitrogen, and then, hydrogenation reaction was conducted at 80°C for 5 hours in the atmosphere of hydrogen using a Ni/Al Ziegler hydrogenating catalyst to obtain a poly (α-methylstyrene) -b-hydrogenated polybutadiene-b-poly (α-methylstyrene) triblock copolymer (hereinafter abbreviated as mSEBmS). The hydrogenation ratio of the mSEBmS was calculated by ¹H-NMR spectrum measurement to be 98.9 %.

### Referential example 2

### Production of a block copolymer composed of poly (α-methylstyrene) block (polymer block (A)) and hydrogenated polybutadiene block (polymer block (B) )

An mSBmS having a number average molecular weight of 80,590, a 1,4-bond amount of 58.9 % and an α-methylstyrene unit content of 28.7 % by mass was synthesized in a similar way as in Referential example 1. α-methylstyrene was not substantially copolymerized into the polybutadiene block. Similar operations as in Referential example 1 were made except to use this mSBmS to obtain an mSEBmS with a hydrogenation ratio of 99.7 %.

### Referential example 3

### Production of a block copolymer composed of poly (α-methylstyrene) block (polymer block (A)) and hydrogenated polybutadiene block (polymer block (B) )

An mSBmS having a number average molecular weight of 85,000, a 1,4-bond amount of 56.1 % and an α-methylstyrene unit content of 28.0 % by mass was synthesized in a similar way as in Referential example 1. α-methylstyrene was not substantially copolymerized into the polybutadiene block. Similar operations as in Referential example 1 were made using the resulting mSBmS except that hydrogenation reaction was conducted at 80°C for 5 hours, whereby an mSEBmS with a hydrogenation ratio of 99.8 % was obtained.

### Referential example 4

### Production of a block copolymer composed of polystyrene block (polymer block (A)), hydrogenated polyisoprene (polymer block (B)) and poly (tert-butylstyrene) (polymer block (C))

After 479 ml of dehydrated cyclohexane and 3.3 ml of sec-butyllithium (1.3M-cyclohexane solution) were put in a 1,000-ml egg-plant type flask, 47.1 ml of 4-tert-butylstyrene, 12.9 ml of styrene and 60.6 ml of isoprene were added successively and polymerized respectively at 30°C, and then 19.1 ml of a solution of 3 % by mass of phenyl benzoate in cyclohexane was added to conduct coupling reaction, whereby poly (4-tert-butylstyrene)-b-polystyrene-b-polyisoprene-b-polystyrene-b-poly (4-tert-butylstyrene) (hereinafter, abbreviated as tBSSIStBS) was synthesized. The number average molecular weight (GPC measurement, in terms of polystyrene) of the obtained tBSSIStBS was 65,700, the amount of the 1,4-bond determined by ¹H-NMR measurement was 94.0 %, the content of the styrene unit was 13.4 % by mass and the content of the 4-tert-butylstyrene unit was 43.5 % by mass.
A solution of the synthesized tBSSIStBS in cyclohexane was prepared, the solution was put in a pressure proof vessel whose atmosphere had sufficiently been replaced with nitrogen, and then, hydrogenation reaction was conducted at 50 °C for 12 hours in the atmosphere of hydrogen using an Ni/Al Ziegler hydrogenating catalyst to obtain a poly (4-tert-butylstyrene)-b-polystyrene-b-hydrogenated polyisoprene-b-polystyrene-b-poly (4-tert-butylstyrene) (hereinafter abbreviated as tBSSEPStBS). The hydrogenation ratio of the tBSSEPStBS was calculated by ¹H-NMR spectrum measurement to be 99.9 %.

### Referential example 5

### Production of a block copolymer composed of polystyrene block (polymer block (A)), hydrogenated polyisoprene (polymer block (B)) and poly (tert-butylstyrene) (polymer block (C))

After 480 ml of dehydrated cyclohexane and 4.8 ml of sec-butyllithium (1.3M-cyclohexane solution) were put in a 1,000-ml egg-plant type flask, 43.9 ml of 4-tert-butylstyrene, 18.6 ml of styrene and 56.4 ml of isoprene were added successively and polymerized respectively at 30°C, and then 24.8 ml of a solution of 3 % by mass of phenyl benzoate in cyclohexane was added to conduct coupling reaction, whereby poly (4-tert-butylstyrene)-b-polystyrene-b-polyisoprene-b-polystyrene-b- poly (4-tert-butylstyrene) (hereinafter, abbreviated as tBSSIStBS) was synthesized. The number average molecular weight (GPC measurement, in terms of polystyrene) of the obtained tBSSIStBS was 47,800, the amount of the 1,4-bond determined by ¹H-NMR measurement was 94.1 %, and the content of the styrene unit was 18.1 % by mass and the content of the 4-tert-butylstyrene unit was 41.3 % by mass.
A solution of the synthesized tBSSIStBS in cyclohexane was prepared, the solution was put in a pressure proof vessel whose atmosphere had sufficiently been replaced with nitrogen, and then, hydrogenation reaction was conducted at 50 °C for 12 hours in the atmosphere of hydrogen using an Ni/Al Ziegler hydrogenating catalyst to obtain a poly (4-tert-butylstyrene)-b-polystyrene-b-hydrogenated polyisoprene-b-polystyrene-b-poly (4-tert-butylstyrene) (hereinafter abbreviated as BSSEPStBS). The hydrogenation ratio of the tBSSEPStBS was calculated by ¹H-NMR spectrum measurement to be 99.9 %.

### Referential example 6

### Production of a block copolymer composed of polystyrene block (polymer block (A)), hydrogenated polyisoprene (polymer block (B)) and poly (4-tert-butylstyrene) (polymer block (C))

After 567 ml of dehydrated cyclohexane and 6.1 ml of sec-butyllithium (1.3M-cyclohexane solution) were put in a 1,000-ml egg-plant type flask, 66.3 ml of 4-tert-butylstyrene, 16.5 ml of styrene and 94.2 ml of isoprene were added successively and polymerized respectively at 30°C, and then 33.3 ml of a solution of 3 % by mass of phenyl benzoate in cyclohexane was added to conduct coupling reaction, whereby poly (4-tert-butylstyrene)-b-polystyrene-b-polyisoprene-b-polystyrene-b-poly (4-tert-butylstyrene) (hereinafter, abbreviated as tBSSIStBS) was synthesized. The number average molecular weight (GPC measurement, in terms of polystyrene) of the obtained tBSSIStBS was 48,100, the amount of the 1,4-bond determined by ¹H-NMR measurement was 94.1 %, and the content of the styrene unit was 10.8 % by mass and the content of the 4-tert-butylstyrene unit was 43.0 % by mass.
A solution of the synthesized tBSSIStBS in cyclohexane was prepared, the solution was put in a pressure proof vessel whose atmosphere had sufficiently been replaced with nitrogen, and then, hydrogenation reaction was conducted at 50°C for 12 hours in the atmosphere of hydrogen using an Ni/Al Ziegler hydrogenating catalyst to obtain a poly (4-tert-butylstyrene)-b-polystyrene-b-hydrogenated polyisoprene-b-polystyrene-b-poly (4-tert-butylstyrene) (hereinafter abbreviated as tBSSEPStBS). The hydrogenation ratio of the tBSSEPStBS was calculated by ¹H-NMR spectrum measurement to be 99.9 %.

### Preparation example 1

### Synthesis of sulfonated mSEBmS

50g of the block copolymer obtained in Referential example 1 (mSEBmS) was vacuum dried for 1 hour in a glass-made reaction vessel equipped with a stirrer, the inside atmosphere of the reaction vessel was replaced with nitrogen, 624 ml of methylene chloride was added, and the mixture was stirred at 35°C for 2 hours to dissolve the block copolymer. After the dissolution, a sulfonating reagent prepared by reacting 14.5 ml of acetic anhydride with 6.5 ml of sulfuric acid at 0°C in 25.3 ml of methylene chloride was gradually added dropwise thereto over a period of 5 minutes. After stirring at 35°C for 10 hours, the polymer solution was poured into 2L of distilled water under stirring to coagulate and deposit the polymer. The deposited solid matter was washed with distilled water of 90°C for 30 minutes, and then filtered. This operation of washing and filtration was repeated until the pH of the washings became unchanged, and the polymer after the final filtration was vacuum dried to obtain a sulfonated mSEBmS. The sulfonation proportion of the benzene rings of the α-methylstyrene units in the sulfonated mSEBmS was 39.0 % by mol from ¹H-NMR analysis, and its ion exchange capacity was 1.23 meq/g.

### Preparation example 2

### Synthesis of sulfonated mSEBmS

50g of the block copolymer obtained in Referential example 1 (mSEBmS) was vacuum dried for 1 hour in a glass-made reaction vessel equipped with a stirrer, the inside atmosphere of the reaction vessel was replaced with nitrogen, 499 ml of methylene chloride was added, and the mixture was stirred at 35°C for 2 hours to dissolve the block copolymer. After the dissolution, a sulfonating reagent prepared by reacting 6.40 ml of acetic anhydride with 2.86 ml of sulfuric acid at 0°C in 12.8 ml of methylene chloride was gradually added dropwise thereto over a period of 5 minutes. After stirring at 35°C for 7 hours, the polymer solution was poured into 2L of distilled water under stirring to coagulate and deposit the polymer. The deposited solid matter was washed with distilled water of 90°C for 30 minutes, and then filtered. This operation of washing and filtration was repeated until the pH of the washings became unchanged, and the polymer after the final filtration was vacuum dried to obtain a sulfonated mSEBmS. The sulfonation proportion of the benzene rings of the α-methylstyrene units in the sulfonated mSEBmS was 19.3 % by mol from ¹H-NMR analysis, and its ion exchange capacity was 0.64 meq/g.

### Preparation example 3

### Synthesis of sulfonated mSEBmS

355g of the block copolymer obtained in Referential example 2 (mSEBmS) was vacuum dried for 1 hour in a glass-made reaction vessel equipped with a stirrer, the inside atmosphere of the reaction vessel was replaced with nitrogen, 3,000 ml of methylene chloride was added, and the mixture was stirred at 35°C for 2 hours to dissolve the block copolymer. After the dissolution, a sulfonating reagent prepared by reacting 77.5 ml of acetic anhydride with 34.7 ml of sulfuric acid at 0°C in 155 ml of methylene chloride was gradually added dropwise thereto over a period of 5 minutes. After stirring at 35°C for 7 hours, the polymer solution was poured into 2L of distilled water under stirring to coagulate and deposit the polymer. The deposited solid matter was washed with distilled water of 90°C for 30 minutes, and then filtered. This operation of washing and filtration was repeated until the pH of the washings became unchanged, and the polymer after the final filtration was vacuum dried to obtain a sulfonated mSEBmS. The sulfonation proportion of the benzene rings of the α-methylstyrene units in the sulfonated mSEBmS was 49.8 % by mol from ¹H-NMR analysis, and its ion exchange capacity was 1.08 meq/g.

### Preparation example 4

### Synthesis of sulfonated mSEBmS

90g of the block copolymer obtained in Referential example 2 (mSEBmS) was vacuum dried for 1 hour in a glass-made reaction vessel equipped with a stirrer, the inside atmosphere of the reaction vessel was replaced with nitrogen, 816 ml of methylene chloride was added, and the mixture was stirred at 35°C for 2 hours to dissolve the block copolymer. After the dissolution, a sulfonating reagent prepared by reacting 9.83 ml of acetic anhydride with 4.39 ml of sulfuric acid at 0°C in 19.7 ml of methylene chloride was gradually added dropwise thereto over a period of 5 minutes. After stirring at 35°C for 4 hours, the polymer solution was poured into 2L of distilled water under stirring to coagulate and deposit the polymer. The deposited solid matter was washed with distilled water of 90°C for 30 minutes, and then filtered. This operation of washing and filtration was repeated until the pH of the washings became unchanged, and the polymer after the final filtration was vacuum dried to obtain a sulfonated mSEBmS. The sulfonation proportion of the benzene rings of the α-methylstyrene units in the sulfonated mSEBmS was 22.0 % by mol from ¹H-NMR analysis, and its ion exchange capacity was 0.50 meq/g.

### Preparation example 5

### Synthesis of sulfonated mSEBmS

90g of the block copolymer obtained in Referential example 2 (mSEBmS) was vacuum dried for 1 hour in a glass-made reaction vessel equipped with a stirrer, the inside atmosphere of the reaction vessel was replaced with nitrogen, 816 ml of methylene chloride was added, and the mixture was stirred at 35°C for 2 hours to dissolve the block copolymer. After the dissolution, a sulfonating reagent prepared by reacting 16.8 ml of acetic anhydride with 7.53 ml of sulfuric acid at 0°C in 33.7 ml of methylene chloride was gradually added dropwise thereto over a period of 5 minutes. After stirring at 35°C for 4 hours, the polymer solution was poured into 2L of distilled water under stirring to coagulate and deposit the polymer. The deposited solid matter was washed with distilled water of 90°C for 30 minutes, and then filtered. This operation of washing and filtration was repeated until the pH of the washings became unchanged, and the polymer after the final filtration was vacuum dried to obtain a sulfonated mSEBmS. The sulfonation proportion of the benzene rings of the α-methylstyrene units in the sulfonated mSEBmS was 36.0 % by mol from ¹H-NMR analysis, and its ion exchange capacity was 0.83 meq/g.

### Preparation example 6

### Synthesis of sulfonated mSEBmS

355g of the block copolymer obtained in Referential example 3 (mSEBmS) was vacuum dried for 1 hour in a glass-made reaction vessel equipped with a stirrer, the inside atmosphere of the reaction vessel was replaced with nitrogen, 3,000 ml of methylene chloride was added, and the mixture was stirred at 35°C for 2 hours to dissolve the block copolymer. After the dissolution, a sulfonating reagent prepared by reacting 73.4 ml of acetic anhydride with 33.0 ml of sulfuric acid at 0°C in 147 ml of methylene chloride was gradually added dropwise thereto over a period of 5 minutes. After stirring at 35°C for 7 hours, the polymer solution was poured into 2L of distilled water under stirring to coagulate and deposit the polymer. The deposited solid matter was washed with distilled water of 90°C for 30 minutes, and then filtered. This operation of washing and filtration was repeated until the pH of the washings became unchanged, and the polymer after the final filtration was vacuum dried to obtain a sulfonated mSEBmS. The sulfonation proportion of the benzene rings of the α-methylstyrene units in the sulfonated mSEBmS was 50.5 % by mol from ¹H-NMR analysis, and its ion exchange capacity was 1.06 meq/g.

### Preparation example 7

### Synthesis of sulfonated mSEBmS

90g of the block copolymer obtained in Referential example 3 (mSEBmS) was vacuum dried for 1 hour in a glass-made reaction vessel equipped with a stirrer, the inside atmosphere of the reaction vessel was replaced with nitrogen, 816 ml of methylene chloride was added, and the mixture was stirred at 35°C for 2 hours to dissolve the block copolymer. After the dissolution, a sulfonating reagent prepared by reacting 9.40 ml of acetic anhydride with 4.20 ml of sulfuric acid at 0°C in 18.9 ml of methylene chloride was gradually added dropwise thereto over a period of 5 minutes. After stirring at 35°C for 4 hours, the polymer solution was poured into 2L of distilled water under stirring to coagulate and deposit the polymer. The deposited solid matter was washed with distilled water of 90°C for 30 minutes, and then filtered. This operation of washing and filtration was repeated until the pH of the washings became unchanged, and the polymer after the final filtration was vacuum dried to obtain a sulfonated mSEBmS. The sulfonation proportion of the benzene rings of the α-methylstyrene units in the sulfonated mSEBmS was 22.5 % by mol from ¹H-NMR analysis, and its ion exchange capacity was 0.49 meq/g.

### Preparation example 8

### Synthesis of sulfonated tBSSEPStBS

50g of the block copolymer obtained in Referential example 4 (tBSSEPStBS) was vacuum dried for 1 hour in a glass-made reaction vessel equipped with a stirrer, the inside atmosphere of the reaction vessel was replaced with nitrogen, 500 ml of methylene chloride was added, and the mixture was stirred at 25°C for 2 hours to dissolve the block copolymer. After the dissolution, a sulfonating reagent prepared by reacting 24.8 ml of acetic anhydride with 10.7 ml of sulfuric acid at 0°C in 49.5 ml of methylene chloride was gradually added dropwise thereto over a period of 5 minutes. After stirring at 25°C for 72 hours, the polymer solution was poured into 1L of distilled water under stirring to coagulate and deposit the polymer. The deposited solid matter was washed with distilled water of 90°C for 30 minutes, and then filtered. This operation of washing and filtration was repeated until the pH of the washings became unchanged, and the polymer after the final filtration was vacuum dried to obtain a sulfonated tBSSEPStBS. The 4-tert-butylstyrene unit of the obtained sulfonated tBSSEPStBS was not sulfonated, and only the styrene unit was sulfonated. The sulfonation proportion of the benzene rings in the styrene units was 91.0 % by mol from ¹H-NMR analysis, and its ion exchange capacity was 1.05 meq/g.

### Preparation example 9

### Synthesis of sulfonated tBSSEPStBS

50g of the block copolymer obtained in Referential example 4 (tBSSEPStBS) was vacuum dried for 1 hour in a glass-made reaction vessel equipped with a stirrer, the inside atmosphere of the reaction vessel was replaced with nitrogen, 500 ml of methylene chloride was added, and the mixture was stirred at 35°C for 2 hours to dissolve the block copolymer. After the dissolution, a sulfonating reagent prepared by reacting 8.4 ml of acetic anhydride with 3.7 ml of sulfuric acid at 0°C in 16.9 ml of methylene chloride was gradually added dropwise thereto over a period of 5 minutes. After stirring at 35°C for 4 hours, the polymer solution was poured into 1L of distilled water under stirring to coagulate and deposit the polymer. The deposited solid matter was washed with distilled water of 90°C for 30 minutes, and then filtered. This operation of washing and filtration was repeated until the pH of the washings became unchanged, and the polymer after the final filtration was vacuum dried to obtain a sulfonated tBSSEPStBS. The 4-tert-butylstyrene unit of the obtained sulfonated tBSSEPStBS was not sulfonated, and only the styrene unit was sulfonated. The sulfonation proportion of the benzene rings in the styrene units was 46.0 % by mol from ¹H-NMR analysis, and its ion exchange capacity was 0.56 meq/g.

### Preparation example 10

### Synthesis of sulfonated tBSSEPStBS

50g of the block copolymer obtained in Referential example 5 (tBSSEPStBS) was vacuum dried for 1 hour in a glass-made reaction vessel equipped with a stirrer, the inside atmosphere of the reaction vessel was replaced with nitrogen, 500 ml of methylene chloride was added, and the mixture was stirred at 25°C for 2 hours to dissolve the block copolymer. After the dissolution, a sulfonating reagent prepared by reacting 33.5 ml of acetic anhydride with 14.5 ml of sulfuric acid at 0°C in 67.0 ml of methylene chloride was gradually added dropwise thereto over a period of 5 minutes. After stirring at 25°C for 72 hours, the polymer solution was poured into 1L of distilled water under stirring to coagulate and deposit the polymer. The deposited solid matter was washed with distilled water of 90°C for 30 minutes, and then filtered. This operation of washing and filtration was repeated until the pH of the washings became unchanged, and the polymer after the final filtration was vacuum dried to obtain a sulfonated tBSSEPStBS. The 4-tert-butylstyrene unit of the obtained sulfonated tBSSEPStBS was not sulfonated, and only the styrene unit was sulfonated. The sulfonation proportion of the benzene rings in the styrene units was 100 % by mol from ¹H-NMR analysis, and its ion exchange capacity was 1.52 meq/g.

### Preparation example 11

### Synthesis of sulfonated tBSSEPStBS

50g of the block copolymer obtained in Referential example 5 (tBSSEPStBS) was vacuum dried for 1 hour in a glass-made reaction vessel equipped with a stirrer, the inside atmosphere of the reaction vessel was replaced with nitrogen, 500 ml of methylene chloride was added, and the mixture was stirred at 35°C for 2 hours to dissolve the block copolymer. After the dissolution, a sulfonating reagent prepared by reacting 6.7 ml of acetic anhydride with 2.9 ml of sulfuric acid at 0°C in 13.4 ml of methylene chloride was gradually added dropwise thereto over a period of 5 minutes. After stirring at 35°C for 4 hours, the polymer solution was poured into 1L of distilled water under stirring to coagulate and deposit the polymer. The deposited solid matter was washed with distilled water of 90°C for 30 minutes, and then filtered. This operation of washing and filtration was repeated until the pH of the washings became unchanged, and the polymer after the final filtration was vacuum dried to obtain a sulfonated tBSSEPStBS. The 4-tert-butylstyrene unit of the obtained sulfonated tBSSEPStBS was not sulfonated, and only the styrene unit was sulfonated. The sulfonation proportion of the benzene rings in the styrene units was 30.0 % by mol from ¹H-NMR analysis, and its ion exchange capacity was 0.50 meq/g.

### Preparation example 12

### Synthesis of sulfonated tBSSEPStBS

50g of the block copolymer obtained in Referential example 6 (tBSSEPStBS) was vacuum dried for 1 hour in a glass-made reaction vessel equipped with a stirrer, the inside atmosphere of the reaction vessel was replaced with nitrogen, 500 ml of methylene chloride was added, and the mixture was stirred at 25°C for 2 hours to dissolve the block copolymer. After the dissolution, a sulfonating reagent prepared by reacting 19.8 ml of acetic anhydride with 8.6 ml of sulfuric acid at 0°C in 39.6 ml of methylene chloride was gradually added dropwise thereto over a period of 5 minutes. After stirring at 25°C for 72 hours, the polymer solution was poured into 1L of distilled water under stirring to coagulate and deposit the polymer. The deposited solid matter was washed with distilled water of 90°C for 30 minutes, and then filtered. This operation of washing and filtration was repeated until the pH of the washings became unchanged, and the polymer after the final filtration was vacuum dried to obtain a sulfonated tBSSEPStBS. The 4-tert-butylstyrene unit of the obtained sulfonated tBSSEPStBS was not sulfonated, and only the styrene unit was sulfonated. The sulfonation proportion of the benzene rings in the styrene units was 100 % by mol from ¹H-NMR analysis, and its ion exchange capacity was 1.00 meq/g.

### Preparation example 13

### Synthesis of sulfonated tBSSEPStBS

50g of the block copolymer obtained in Referential example 6 (tBSSEPStBS) was vacuum dried for 1 hour in a glass-made reaction vessel equipped with a stirrer, the inside atmosphere of the reaction vessel was replaced with nitrogen, 500 ml of methylene chloride was added, and the mixture was stirred at 35°C for 2 hours to dissolve the block copolymer. After the dissolution, a sulfonating reagent prepared by reacting 6.7 ml of acetic anhydride with 2.9 ml of sulfuric acid at 0°C in 13.4 ml of methylene chloride was gradually added dropwise thereto over a period of 5 minutes. After stirring at 35°C for 4 hours, the polymer solution was poured into 1L of distilled water under stirring to coagulate and deposit the polymer. The deposited solid matter was washed with distilled water of 90°C for 30 minutes, and then filtered. This operation of washing and filtration was repeated until the pH of the washings became unchanged, and the polymer after the final filtration was vacuum dried to obtain a sulfonated tBSSEPStBS. The 4-tert-butylstyrene unit of the obtained sulfonated tBSSEPStBS was not sulfonated, and only the styrene unit was sulfonated. The sulfonation proportion of the benzene rings in the styrene units was 48.0 % by mol from ¹H-NMR analysis, and its ion exchange capacity was 0.48 meq/g.

### Example 1

### (1) Production of a multilayer polymer electrolyte membrane for fuel cells

A 18 % by mass solution of the sulfonated mSEBmS obtained in Preparation example 1 (ion exchange capacity 1.23 meq/g) in toluene/isobutyl alcohol (mass ratio 8/2) was prepared, and the solution was applied on a PET film after a mold releasing treatment (made by Toyobo Co., "Toyobo Ester Film K1504") at a thickness of about 125 µm, sufficiently dried at room temperature and then vacuum dried to obtain a membrane (A) of 11 µm thickness.
Then, a 22 % by mass solution of the sulfonated mSEBmS obtained in Preparation example 2 (ion exchange capacity 0.64 meq/g) in cyclohexane/isopropyl alcohol (mass ratio 65/35) was prepared, and the solution was applied on membrane (A) at a thickness of about 250 um, sufficiently dried at room temperature and then vacuum dried to obtain a multilayer membrane (B) of 40 µm thickness.
Then, a 18 % by mass solution of the sulfonated mSEBmS obtained in Preparation example 1 (ion exchange capacity 1.23 meq/g) in toluene/isobutyl alcohol (mass ratio 8/2) was prepared, and the solution was applied on multilayer membrane (B) at a thickness of about 150 µm, sufficiently dried at room temperature and then vacuum dried to obtain a multilayer membrane (C) of 53 µm thickness.

### (2) Production of a single cell for polymer electrolyte fuel cells

Electrodes for a polymer electrolyte fuel cell were produced according to the following procedure. A solution of 5 % by mass Nafion in methanol was mixed with a carbon-supported Pt-Ru alloy catalyst so that the mass ratio of the Pt-Ru alloy to Nafion could be 2:1, whereby a paste of uniform dispersion was prepared. This paste was applied onto a transfer sheet and dried for 24 hours to prepare a catalyst sheet for the anode side. A solution of 5 % by mass Nafion in a mixed solvent of a lower alcohol and water was mixed with a carbon-supported Pt catalyst so that the mass ratio of the Pt catalyst to Nafion could be 2:1, whereby a paste of uniform dispersion was prepared, and then, a catalyst sheet for the cathode side was prepared in a similar way as in the anode side. The multilayer electrolyte membrane for fuel cells produced in (1) was put between the above two kinds of catalyst sheets so that the membrane and the catalyst side of each catalyst sheet faced each other, the resulting composite was put between two sheets of heat resistant film, the resulting composite was put between two stainless steel sheets, and the resulting composite was hot pressed (150°C, 100 kg/cm², 10 minutes) to bond the membrane and the catalyst sheets together. The stainless steel sheets and the sheets of heat resistant film were removed, and finally, the transfer sheets were peeled to produce a membrane electrode assembly. The membrane electrode assembly was put between two sheets of carbon paper, the resulting composite was put between two sheets of electrically conductive separators also having a role of paths for gas supply, the resulting composite was put between two sheets of electric current-collecting sheets, and the resulting composite was put between two clamping sheets to assemble a test cell for polymer electrolyte fuel cells.

### Example 2

### Production of a multilayer electrolyte membrane for fuel cells

A 12 % by mass solution of the sulfonated mSEBmS obtained in Preparation example 3 (ion exchange capacity 1.08 meq/g) in toluene/isobutyl alcohol (mass ratio 8/2) was prepared, and the solution was applied on a PET film after a mold releasing treatment (made by Toyobo Co., "Toyobo Ester Film K1504") at a thickness of about 450 µm, sufficiently dried at room temperature and then vacuum dried to obtain a membrane (A) of 28 µm thickness.
Then, a 10 % by mass solution of the sulfonated mSEBmS obtained in Preparation example 4 (ion exchange capacity 0.50 meq/g) in cyclohexane/isopropyl alcohol (mass ratio 85/15) was prepared, and the solution was applied on membrane (A) at a thickness of about 125 µm, sufficiently dried at room temperature and then vacuum dried to obtain a multilayer membrane (B) of 32 µm thickness.
Then, a 12 % by mass solution of the sulfonated mSEBmS obtained in Preparation example 3 (ion exchange capacity 1.08 meq/g) in toluene/isobutyl alcohol (mass ratio 8/2) was prepared, and the solution was applied on multilayer membrane (B) at a thickness of about 450 µm, sufficiently dried at room temperature and then vacuum dried to obtain a multilayer membrane (C) of 51 µm thickness.

### Example 3

### Production of a multilayer electrolyte membrane for fuel cells

The same procedure was conducted as in Example 2 except that a 10 % by mass solution of the sulfonated mSEBmS obtained in Preparation example 4 in cyclohexane/isopropyl alcohol (mass ratio 85/15) was applied on membrane (A) at a thickness of about 150 µm, whereby a multilayer membrane (C) of 54.5 µm thickness was obtained.

### Example 4

### Production of a multilayer electrolyte membrane for fuel cells

A 13 % by mass solution of the sulfonated mSEBmS obtained in Preparation example 3 in toluene/isobutyl alcohol (mass ratio 8/2) was prepared, and the solution was applied on a PET film after a mold releasing treatment (made by Toyobo Co., "Toyobo Ester Film K1504") at a thickness of about 300 µm, sufficiently dried at room temperature and then vacuum dried to obtain a membrane (A) of 22 µm thickness.
Then, a 10 % by mass solution of the sulfonated mSEBmS obtained in Preparation example 4 in cyclohexane/isopropyl alcohol (mass ratio 85/15) was prepared, and the solution was applied on membrane (A) at a thickness of about 250 µm, sufficiently dried at room temperature and then vacuum dried to obtain a multilayer membrane (B) of 32 µm thickness.
Then, a 13 % by mass solution of the sulfonated mSEBmS obtained in Preparation example 3 in toluene/isobutyl alcohol (mass ratio 8/2) was prepared, and the solution was applied on multilayer membrane (B) at a thickness of about 350 µm, sufficiently dried at room temperature and then vacuum dried to obtain a multilayer membrane (C) of 51 µm thickness.

### Example 5

### Production of a multilayer electrolyte membrane for fuel cells

A 13 % by mass solution of the sulfonated mSEBmS obtained in Preparation example 3 in toluene/isobutyl alcohol (mass ratio 8/2) was prepared, and the solution was applied on a PET film after a mold releasing treatment (made by Toyobo Co., "Toyobo Ester Film K1504") at a thickness of about 150 µm, sufficiently dried at room temperature and then vacuum dried to obtain a membrane (A) of 10 µm thickness.
Then, a 15 % by mass solution of the sulfonated mSEBmS obtained in Preparation example 4 in cyclohexane/isopropyl alcohol (mass ratio 85/15) was prepared, and the solution was applied on membrane (A) at a thickness of about 350 µm, sufficiently dried at room temperature and then vacuum dried to obtain a multilayer membrane (B) of 38 µm thickness.
Then, a 13 % by mass solution of the sulfonated mSEBmS obtained in Preparation example 3 in toluene/isobutyl alcohol (mass ratio 8/2) was prepared, and the solution was applied on multilayer membrane (B) at a thickness of about 200 µm, sufficiently dried at room temperature and then vacuum dried to obtain a multilayer membrane (C) of 51 µm thickness.

### Example 6

### Production of a multilayer electrolyte membrane for fuel cells

A 14 % by mass solution of the sulfonated mSEBmS obtained in Preparation example 3 in toluene/isobutyl alcohol (mass ratio 8/2) was prepared, and the solution was applied on a PET film after a mold releasing treatment (made by Toyobo Co., "Toyobo Ester Film K1504") at a thickness of about 450 µm, sufficiently dried at room temperature and then vacuum dried to obtain a membrane (A) of 32 µm thickness.
Then, a 12 % by mass solution of the sulfonated mSEBmS obtained in Preparation example 4 in cyclohexane/isopropyl alcohol (mass ratio 85/15) was prepared, and the solution was applied on membrane (A) at a thickness of about 350 µm, sufficiently dried at room temperature and then vacuum dried to obtain a multilayer membrane (B) of 51 µm thickness.

### Example 7

### Production of a multilayer electrolyte membrane for fuel cells

A 14 % by mass solution of the sulfonated mSEBmS obtained in Preparation example 3 in toluene/isobutyl alcohol (mass ratio 8/2) was prepared, and the solution was applied on a PET film after a mold releasing treatment (made by Toyobo Co., "Toyobo Ester Film K1504") at a thickness of about 300 µm, sufficiently dried at room temperature and then vacuum dried to obtain two membranes (A) of 22 µm thickness.
Then, a 12 % by mass solution of the sulfonated mSEBmS obtained in Preparation example 4 in cyclohexane/isopropyl alcohol (mass ratio 85/15) was prepared, and the solution was applied on a PET film after a mold releasing treatment (made by Toyobo Co., "Toyobo Ester Film K1504") at a thickness of about 100 µm, sufficiently dried at room temperature and then vacuum dried to obtain a membrane (B) of 5 µm thickness.
Then, membrane (A) and membrane (B) were thermocompression bonded using a roll set at a temperature of 150°C, whereby a multilayer membrane (C) was obtained. Then, the side of membrane (B) in multilayer membrane (C) and membrane (A) were thermocompression bonded in the same manner as above to obtain a multilayer membrane (D) of 51 µm thickness.

### Example 8

### Production of a multilayer electrolyte membrane for fuel cells

A 16 % by mass solution of the sulfonated mSEBmS obtained in Preparation example 6 in toluene/isobutyl alcohol (mass ratio 8/2) was prepared, and the solution was applied on a PET film after a mold releasing treatment (made by Toyobo Co., "Toyobo Ester Film K1504") at a thickness of about 125 µm and dried at 80°C for 3 minutes using a hot air dryer to obtain a membrane (A) of 12 µm thickness.
Then, a 12 % by mass solution of the sulfonated mSEBmS obtained in Preparation example 7 in toluene/isobutyl alcohol (mass ratio 8/2) was prepared, and the solution was applied on membrane (A) at a thickness of about 75 µm and dried at 80°C for 3 minutes using a hot air dryer to obtain a multilayer membrane (B) of 18 µm thickness.
Then, a 16 % by mass solution of the sulfonated mSEBmS obtained in Preparation example 6 in toluene/isobutyl alcohol (mass ratio 8/2) was prepared, and the solution was applied on multilayer membrane (B) at a thickness of about 125 µm and dried at 80°C for 3 minutes using a hot air dryer to obtain a multilayer membrane (C) of 31 µm thickness.

### Example 9

### Production of a multilayer electrolyte membrane for fuel cells

A 22 % by mass solution of the sulfonated tBSSEPStBS obtained in Preparation example 8 in toluene/isobutyl alcohol (mass ratio 8/2) was prepared, and the solution was applied on a PET film after a mold releasing treatment (made by Toyobo Co., "Toyobo Ester Film K1504") at a thickness of about 75 µm and dried at 80°C for 3 minutes using a hot air dryer to obtain a membrane (A) of 11 µm thickness.
Then, a 22 % by mass solution of the sulfonated tBSSEPStBS obtained in Preparation example 9 in toluene/isobutyl alcohol (mass ratio 8/2) was prepared, and the solution was applied on membrane (A) at a thickness of about 100 µm and dried at 80°C for 3 minutes using a hot air dryer to obtain a multilayer membrane (B) of 26 µm thickness.
Then, a 10 % by mass solution of the sulfonated tBSSEPStBS obtained in Preparation example 8 in toluene/isobutyl alcohol (mass ratio 8/2) was prepared, and the solution was applied on multilayer membrane (B) at a thickness of about 75 µm and dried at 80°C for 3 minutes using a hot air dryer to obtain a multilayer membrane (C) of 31 µm thickness.

### Example 10

### Production of a multilayer electrolyte membrane for fuel cells

A 25 % by mass solution of the sulfonated tBSSEPStBS obtained in Preparation example 10 in toluene/isobutyl alcohol (mass ratio 8/2) was prepared, and the solution was applied on a PET film after a mold releasing treatment (made by Toyobo Co., "Toyobo Ester Film K1504") at a thickness of about 75 µm and dried at 80°C for 3 minutes using a hot air dryer to obtain a membrane (A) of 12 µm thickness.
Then, a 25 % by mass solution of the sulfonated tBSSEPStBS obtained in Preparation example 11 in toluene/isobutyl alcohol (mass ratio 8/2) was prepared, and the solution was applied on membrane (A) at a thickness of about 75 µm and dried at 80°C for 3 minutes using a hot air dryer to obtain a multilayer membrane (B) of 25 µm thickness.
Then, a 25 % by mass solution of the sulfonated tBSSEPStBS obtained in Preparation example 10 in toluene/isobutyl alcohol (mass ratio 8/2) was prepared, and the solution was applied on multilayer membrane (B) at a thickness of about 75 µm and dried at 80°C for 3 minutes using a hot air dryer to obtain a multilayer membrane (C) of 35 µm thickness.

### Example 11

### Production of a multilayer electrolyte membrane for fuel cells

A 20 % by mass solution of the sulfonated tBSSEPStBS obtained in Preparation example 12 in toluene/isobutyl alcohol (mass ratio 8/2) was prepared, and the solution was applied on a PET film after a mold releasing treatment (made by Toyobo Co., "Toyobo Ester Film K1504") at a thickness of about 75 µm and dried at 80°C for 3 minutes using a hot air dryer to obtain a membrane (A) of 10 µm thickness.
Then, a 18 % by mass solution of the sulfonated tBSSEPStBS obtained in Preparation example 13 in toluene/isobutyl alcohol (mass ratio 8/2) was prepared, and the solution was applied on membrane (A) at a thickness of about 75 µm and dried at 80°C for 3 minutes using a hot air dryer to obtain a multilayer membrane (B) of 20 µm thickness.
Then, a 20 % by mass solution of the sulfonated tBSSEPStBS obtained in Preparation example 12 in toluene/isobutyl alcohol (mass ratio 8/2) was prepared, and the solution was applied on multilayer membrane (B) at a thickness of about 75 µm and dried at 80°C for 3 minutes using a hot air dryer to obtain a multilayer membrane (C) of 30 µm thickness.

### Comparative example 1

### Production of an electrolyte membrane for fuel cells

A 18 % by mass solution of the sulfonated mSEBmS obtained in Preparation example 1 (ion exchange capacity 1.23 meq/g) in toluene/isobutyl alcohol (mass ratio 8/2) was prepared, and the solution was applied on a PET film after a mold releasing treatment (made by Toyobo Co., "Toyobo Ester Film K1504") at a thickness of about 550 µm, sufficiently dried at room temperature and then vacuum dried to obtain a membrane (A) of 50 µm thickness.

### Comparative example 2

### Production of an electrolyte membrane for fuel cells

A 22 % by mass solution of the sulfonated mSEBmS obtained in Preparation example 2 (ion exchange capacity 0.64 meq/g) in cyclohexane/isopropyl alcohol (mass ratio 65/35) was prepared, and the solution was applied on a PET film after a mold releasing treatment (made by Toyobo Co., "Toyobo Ester Film K1504") at a thickness of about 450 µm, sufficiently dried at room temperature and then vacuum dried to obtain a membrane (A) of 50 µm thickness.

### Comparative example 3

### Production of an electrolyte membrane for fuel cells

The same procedure as in Comparative example 1 was conducted except that a 16% by mass solution of the sulfonated mSEBmS obtained in Preparation example 3 (ion exchange capacity 1.08 meq/g) in toluene/isobutyl alcohol (mass ratio 8/2) was used, whereby a membrane (A) of 50 µm thickness was obtained.

### Comparative example 4

### Production of an electrolyte membrane for fuel cells

The same procedure as in Comparative example 1 was conducted except that a 16% by mass solution of the sulfonated mSEBmS obtained in Preparation example 4 (ion exchange capacity 0.50 meq/g) in toluene/isobutyl alcohol (mass ratio 8/2) was used, whereby a membrane (A) of 50 µm thickness was obtained.

### Comparative example 5

### Production of an electrolyte membrane for fuel cells

The same procedure as in Comparative example 1 was conducted except that a 16% by mass solution of the sulfonated mSEBmS obtained in Preparation example 5 (ion exchange capacity 0.83 meq/g) in toluene/isobutyl alcohol (mass ratio 8/2) was used, whereby a membrane (A) of 50 µm thickness was obtained.

### Comparative example 6

### Production of a single cell for polymer electrolyte fuel cells

A Nafion film made by Dupont Co. (Nafion 117) was selected as a perfluorocarbonsulfonic acid polymer electrolyte. The thickness of the film was about 175 µm and the ion exchange capacity thereof was 0.91 meq/g. The same procedure as in Example 1(2) was conducted except that the film was used in place of the electrolyte membrane for polymer electrolyte fuel cells, whereby a single cell for polymer electrolyte fuel cells was obtained.

### Comparative example 7

### Production of an electrolyte membrane for fuel cells

A 16.5 % by mass solution of the sulfonated mSEBmS obtained in Preparation example 6 (ion exchange capacity 1.06 meq/g) in toluene/isobutyl alcohol (mass ratio 8/2) was prepared, and the solution was applied on a PET film after a mold releasing treatment (made by Toyobo Co., "Toyobo Ester Film K1504") at a thickness of about 300 µm and dried at 80°C for 3 minutes using a hot air dryer to obtain a membrane (A) of 30 µm thickness.

### Comparative example 8

### Production of an electrolyte membrane for fuel cells

The same procedure as in Comparative example 7 was conducted except that a 17.5% by mass solution of the sulfonated mSEBmS obtained in Preparation example 7 (ion exchange capacity 0.49 meq/g) in toluene/isobutyl alcohol (mass ratio 8/2) was used, whereby a membrane (A) of 30 µm thickness was obtained.

### Comparative example 9

### Production of an electrolyte membrane for fuel cells

A 25 % by mass solution of the sulfonated tBSSEPStBS obtained in Preparation example 8 (ion exchange capacity 1.05 meq/g) in toluene/isobutyl alcohol (mass ratio 8/2) was prepared, and the solution was applied on a PET film after a mold releasing treatment (made by Toyobo Co., "Toyobo Ester Film K1504") at a thickness of about 200 µm and dried at 80°C for 3 minutes using a hot air dryer to obtain a membrane (A) of 30 µm thickness.

### Comparative example 10

### Production of an electrolyte membrane for fuel cells

A 30 % by mass solution of the sulfonated tBSSEPStBS obtained in Preparation example 9 (ion exchange capacity 0.56 meq/g) in toluene/isobutyl alcohol (mass ratio 8/2) was prepared, and the solution was applied on a PET film after a mold releasing treatment (made by Toyobo Co., "Toyobo Ester Film K1504") at a thickness of about 150 µm and dried at 80°C for 3 minutes using a hot air dryer to obtain a membrane (A) of 30 µm thickness.

### Comparative example 11

### Production of an electrolyte membrane for fuel cells

The same procedure as in Comparative example 10 was conducted except that a 28% by mass solution of the sulfonated tBSSEPStBS obtained in Preparation example 10 (ion exchange capacity 1.52 meq/g) in toluene/isobutyl alcohol (mass ratio 8/2) was used, whereby a membrane (A) of 30 µm thickness was obtained.

### Comparative example 12

### Production of an electrolyte membrane for fuel cells

A 35 % by mass solution of the sulfonated tBSSEPStBS obtained in Preparation example 11 (ion exchange capacity 0.50 meq/g) in toluene/isobutyl alcohol (mass ratio 8/2) was prepared, and the solution was applied on a PET film after a mold releasing treatment (made by Toyobo Co., "Toyobo Ester Film K1504") at a thickness of about 125 µm and dried at 80°C for 3 minutes using a hot air dryer to obtain a membrane (A) of 30 µm thickness.

### Comparative example 13

### Production of an electrolyte membrane for fuel cells

The same procedure as in Comparative example 10 was conducted except that a 29% by mass solution of the sulfonated tBSSEPStBS obtained in Preparation example 12 (ion exchange capacity 1.00 meq/g) in toluene/isobutyl alcohol (mass ratio 8/2) was used, whereby a membrane (A) of 30 µm thickness was obtained.

### Comparative example 14

### Production of an electrolyte membrane for fuel cells

The same procedure as in Comparative example 10 was conducted except that a 29% by mass solution of the sulfonated tBSSEPStBS obtained in Preparation example 13 (ion exchange capacity 0.47 meq/g) in toluene/isobutyl alcohol (mass ratio 8/2) was used, whereby a membrane (A) of 30 µm thickness was obtained.

### Tests for evaluation of performance of the polymer electrolyte membranes of Examples and Comparative examples as a proton-conducting electrolyte membrane for polymer electrolyte fuel cells

In the following tests of 1) to 5), the membrane produced from the sulfonated block copolymer obtained in each example or comparative example or the Nafion film was used as a sample.

### 1) Measurement of ion exchange capacity

A sample was weighed (a (g)) in a glass vessel which can be shut tightly, an excess amount of an aqueous saturated solution of sodium chloride was added thereto, and the mixture was stirred overnight. Hydrogen chloride formed in the system was titrated (b (ml)) with a 0.01 N aqueous NaOH standard solution (titer f) using a phenolphthalein solution as an indicator. The ion exchange capacity of the sample was calculated according to the following equation. Ion exchange capacity = (0.01 × b × f) / a

### 2) Measurement of electric resistance of a membrane

A sample of 1 cm x 4 cm was put between a pair of platinum electrodes, and the composite was set in an open-air cell. The resulting open-air cell was placed in a constant temperature and constant humidity chamber whose inside temperature and relative humidity were adjusted to 60°C and 90 %, respectively, or in water of a temperature of 40°C, and the electric resistance of the membrane was measured by an alternating current impedance method.

### 3) Methanol permeation rate

A methanol permeation rate was calculated by setting an electrolyte membrane in the center of an H-type cell, putting 55 ml of a 3 M (mol/liter) aqueous methanol solution in one of the resulting two spaces and 55 ml of pure water in the other space, stirring both liquids at 25°C and measuring the amount of methanol diffusing through the electrolyte membrane into the pure water using gas chromatography (the area of the electrolyte membrane 4.5 cm²).

### 4) Evaluation of the power generation characteristic of a single cell for fuel cells

As to the single cell for polymer electrolyte fuel cells produced in each of Example 1 and Comparative example 6, power generation characteristic was evaluated. A 5M-MeOH aqueous solution was used as a fuel, and air was used as an oxidizing agent. The test was conducted at a cell temperature of 60°C under a condition of MeOH: 0.36 ml/min and air: 250 ml/min.

### Results of the performance tests of polymer electrolyte membranes as a proton-conducting electrolyte membrane for polymer electrolyte fuel cells

The results of electric resistance of the membrane and the methanol permeation rate of a 3M-MeOH aqueous solution measured on the membranes produced in Examples 1 to 7 and Comparative examples 1 to 6 and the Nafion membrane of Comparative example 6 are shown in Table 1, and the results of electric resistance of the membrane and the methanol permeation rate of a 3M-MeOH aqueous solution measured on the membranes produced in Examples 8 to 11 and Comparative examples 7 to 14 are shown in Table 2.

**Table 1**

| | Membrane thickness (µm) | Ion exchange capacity (meq/g) | Electric resistance of membrane (mΩ.cm²) (60°C, 90%) | Methanol permeation rate (µmol.cm⁻² .min⁻¹) |
|---|---|---|---|---|
| Example 1 | 53 | 0.82 | 96 | 1.3 |
| Example 2 | 51 | 0.91 | 52 | 5.4 |
| Example 3 | 55 | 0.90 | 65 | 4.8 |
| Example 4 | 51 | 0.89 | 62 | 4.3 |
| Example 5 | 51 | 0.76 | 14 | 3.8 |
| Example 6 | 51 | 0.86 | 94 | 0.5 |
| Example 7 | 49 | 0.91 | 65 | 4.0 |
| | | | | |
| Com.ex. 1 | 50 | 1.23 | 55 | 12 |
| Com.ex. 2 | 50 | 0.64 | 400 | 1.8 |
| Com.ex. 3 | 50 | 1.08 | 48 | 23 |
| Com.ex. 4 | 50 | 0.50 | 170 | 1.0 |
| Com.ex. 5 | 50 | 0.83 | 121 | 7.4 |
| Com.ex. 6 | 175 | 0.91 | 214 | 18 |

| | | | | |
|---|---|---|---|---|
| Com.ex. : Comparative example | | | | |

**Table 2**

| | Membrane thickness (µm) | Ion exchange capacity (meq/g) | Electric resistance of membrane (mΩ.cm²) (40°C, in water) | Methanol permeation rate (µmol.cm⁻².min⁻¹) |
|---|---|---|---|---|
| Example 8 | 31 | 0.95 | 36 | 6.6 |
| Example 9 | 31 | 0.68 | 66 | 8.9 |
| Example 10 | 35 | 1.14 | 40 | 5.8 |
| Example 11 | 30 | 0.76 | 73 | 5.0 |
| | | | | |
| Com.ex. 7 | 30 | 1.06 | 33 | 23 |
| Com.ex. 8 | 32 | 0.49 | 136 | 0.82 |
| Com.ex. 9 | 30 | 1.05 | 62 | 15 |
| Com.ex. 10 | 30 | 0.5 | 107 | 5.6 |
| Com.ex. 11 | 30 | 1.5 | 32 | 26 |
| Com.ex. 12 | 30 | 0.50 | 189 | 3.2 |
| Com.ex. 13 | 30 | 1.00 | 66 | 12 |
| Com.ex. 14 | 30 | 0.47 | 230 | 2.3 |

It was made apparent from comparison between Examples 2, 3 and 4 and Comparative examples 3, 4 and 5 that, when a membrane comprising a polymer having a high sulfonation proportion which makes lowering of the electric resistance of the membrane possible and a membrane comprising a polymer having a low sulfonation proportion which is excellent in inhibition of methanol permeation are laminated, it is possible to reconcile lowering of the electric resistance of the membrane with low methanol permeability, compared to a single membrane comprising each polymer (Comparative examples 3 and 4) and a single membrane comprising a polymer having the same extent of ion exchange capacity (Comparative example 5). Similarly, it was also made apparent from comparison between Example 1 and Comparative examples 1 and 2 that when lamination is made, it is possible to reconcile lowering of the electric resistance of the membrane with low methanol permeability.
Likewise, it was made apparent from comparison between Example 8 and Comparative examples 7 and 8, comparison between Example 9 and Comparative examples 9 and 10, comparison between Example 10 and Comparative examples 11 and 12, and comparison between Example 11 and Comparative examples 13 and 14 that, when a membrane comprising a polymer having a high sulfonation proportion which makes lowering of the electric resistance of the membrane possible and a membrane comprising a polymer having a low sulfonation proportion which is excellent in inhibition of methanol permeation are laminated, it is possible to reconcile lowering of the electric resistance of the membrane with low methanol permeability, compared to a single membrane comprising each polymer (Comparative examples 7 to 14).
Further, it was made apparent from comparison between Example 2 and Example 7 that it is possible to reconcile lowering of the electric resistance of the membrane with low methanol permeability, irrespective of difference in methods of preparation of a membrane.
In the membranes of Examples 1 to 7, the electric resistance of the membrane was 60 % or less and methanol permeability was 50 % or less, compared to the Nafion membrane mentioned in Comparative example 6 as a typical example of electrolyte membranes for fuel cells.

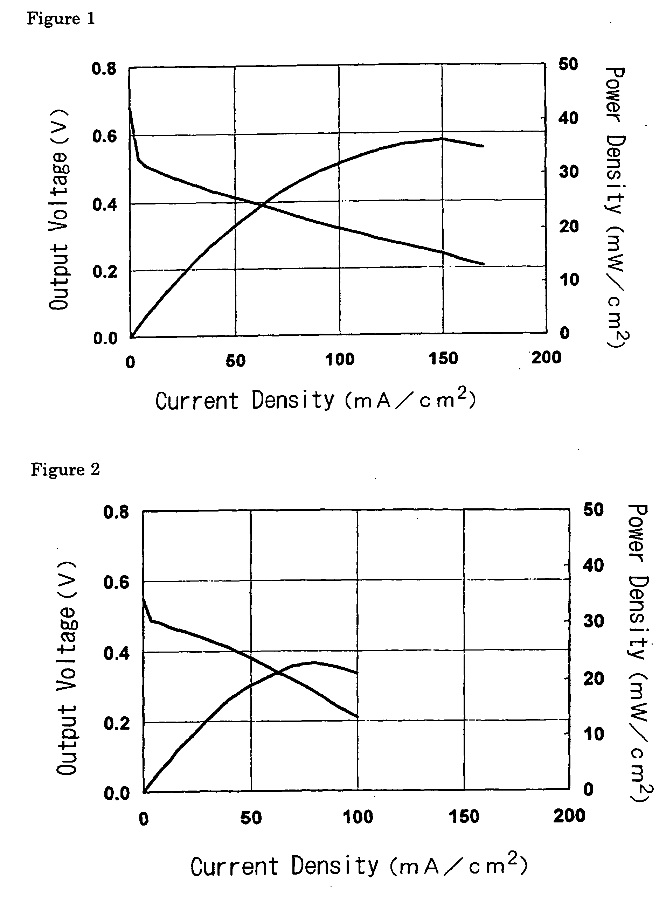

As power generation characteristics of the single cells for polymer electrolyte fuel cells obtained in Example 1 (2) and Comparative example 6, change of output voltage as against current density, and change of power density as against current density were measured. The results are shown in Figs. 1 and 2. The open circuit voltage of the single cell produced in Example 1(2) was 0.68 V and the maximum power density thereof was 36 mW/cm². On the other hand, the open circuit voltage of the single cell made of Nafion 117 in Comparative example 6 was 0.55 V and the maximum power density thereof was 23 mW/cm². From this, it was made clear that the single cell for polymer electrolyte fuel cells obtained in Example 1 (2) has power generation characteristics superior to those of the single cell for polymer electrolyte fuel cells produced using a Nafion 117 membrane which has hithereto been used.
When the single cell for polymer electrolyte fuel cells obtained in Example 1 (2) was taken apart after the power generation test, peeling, etc. were not observed at all in the membrane electrode assembly, which makes it evident that the membrane is also excellent in bonding properties.

### BRIEF DESCRIPTION OF THE DRAWINGS

Figure 1 is a drawing showing the current density-output voltage and the current density-power density of a single cell for polymer electrolyte fuel cells (Example 1 (2)).
Figure 2 is a drawing showing the current density-output voltage and the current density-power density of a single cell for polymer electrolyte fuel cells (Comparative example 6).

## Claims

1. A multilayer electrolyte membrane for polymer electrolyte fuel cells, consisting of a laminate of at least two polymer electrolyte membranes at least one of which membranes comprises a block copolymer (I) which comprises, as its constituents, a polymer block (A) having as a main unit an aromatic vinyl compound unit and a flexible polymer block (B), has ion-conducting groups on the polymer block (A) and has no ion-conducting group on the polymer block (B), and in which multilayer electrolyte membrane, at least one of the constitutive electrolyte membranes has an ion exchange capacity of 0.7 to 3.0 meq/g, at least one of the constitutive electrolyte membranes has an ion exchange capacity of 0.3 to 0.7 meq/g and the difference in ion exchange capacity between the electrolyte membrane having a larger ion exchange capacity and the electrolyte membrane having a smaller ion exchange capacity is 0.03 meq/g or more, and the flexible polymer block (B) is a polymer block comprising at least one unit selected from the group consisting of a vinylcycloalkene unit having 7 to 10 carbon atoms wherein all of carbon-carbon double bonds are hydrogenated, a conjugated diene unit having 4 to 8 carbon atoms wherein all of carbon-carbon double bonds are hydrogenated and a conjugated cycloalkadiene unit having 5 to 8 carbon atoms wherein all of carbon-carbon double bonds are hydrogenated.

2. The multilayer electrolyte membrane according to claim 1, wherein at least two of the constitutive electrolyte membranes comprise the block copolymer (I).

3. The multilayer electrolyte membrane according to claim 1 or 2, wherein when the number of the constitutive electrolyte membranes is two, they have mutually different ion exchange capacities, and when the number of the constitutive electrolyte membranes is three or more, at least two of them have mutually different ion exchange capacities.

4. The multilayer electrolyte membrane according to any one of claims 1 to 3, wherein at least one of the constitutive electrolyte membranes comprises the block copolymer (I) and has an ion exchange capacity of 0.7 to 3.0 meq/g, at least one of the constitutive electrolyte membranes comprises the block copolymer (I) and has an ion exchange capacity of 0.3 to 0.7 meq/g, and the difference in ion exchange capacity between the electrolyte membrane having a larger ion exchange capacity and the electrolyte membrane having a smaller ion exchange capacity is 0.03 meq/g or more.

5. The multilayer electrolyte membrane according to any one of claims 1 to 4, wherein the proportion of the aromatic vinyl compound unit in the polymer block (A) is 50 % by mass or more.

6. The multilayer electrolyte membrane according to any one of claims 1 to 5, wherein the mass ratio of the polymer block (A) to the polymer block (B) is 95:5 to 5:95.

7. The multilayer electrolyte membrane according to any one of claims 1 to 6, wherein the flexible polymer block (B) is a polymer block comprising at least one unit selected from the group consisting of conjugated diene units each having 4 to 8 carbon atoms in which unit all of carbon-carbon double bonds are hydrogenated.

8. The multilayer electrolyte membrane according to any one of claims 1 to 7, wherein the ion-conducting group is a group represented by -SO₃M or -PO₃HM wherein M represents a hydrogen atom, an ammonium ion or an alkali metal ion.

9. The multilayer electrolyte membrane according to any one of claims 1 to 8, wherein the aromatic vinyl compound unit is an aromatic vinyl compound unit whose α-carbon is quaternary carbon.

10. The multilayer electrolyte membrane according to claim 9, wherein the aromatic vinyl compound unit whose α-carbon is quaternary carbon is an aromatic vinyl compound unit wherein the hydrogen atom bonded to the α-carbon is replaced with an alkyl group having 1 to 4 carbon atoms, a halogenated alkyl group having 1 to 4 carbon atoms or a phenyl group.

11. The multilayer electrolyte membrane according to claim 9 or 10, wherein the aromatic vinyl compound unit whose α-carbon is quaternary carbon is an α-methylstyrene unit, and the flexible polymer block (B) is a polymer block comprising at least one unit selected from the group consisting of conjugated diene units each having 4 to 8 carbon atoms wherein all of carbon-carbon double bonds are hydrogenated.

12. A membrane electrode assembly wherein the multilayer electrolyte membrane according to any one of claims 1 to 11 is used.

13. A polymer electrolyte fuel cell wherein the membrane electrode assembly according to claim 12 is used.

## Patentansprüche

1. Mehrschicht-Elektrolytmembran für Polymerelektrolyt-Brennstoffzellen, bestehend aus einem Laminat aus mindestens zwei Polymerelektrolytmembranen, wobei mindestens eine von diesen Membranen ein Blockcopolymer (I) umfasst, welches als seine Bestandteile einen Polymerblock (A), der als Haupteinheit eine aromatische Vinylverbindungseinheit aufweist, und einen flexiblen Polymerblock (B) umfasst, welches ionenleitende Gruppen auf dem Polymerblock (A) aufweist und keine ionenleitenden Gruppen auf dem Polymerblock (B) aufweist, und in welcher Mehrschicht-Elektrolytmembran mindestens eine der konstitutiven Elektrolytmembranen eine Ionenaustauschkapazität von 0,7 bis 3,0 meq/g aufweist, mindestens eine der konstitutiven Elektrolytmembranen eine Ionenaustauschkapazität von 0,3 bis 0,7 meq/g aufweist und der Unterschied in der Ionenaustauschkapazität zwischen der Elektrolytmembran mit einer größeren Ionenaustauschkapazität und der Elektrolytmembran mit einer kleineren Ionenaustauschkapazität 0,03 meq/g oder mehr beträgt, und der flexible Polymerblock (B) ein Polymerblock ist, umfassend mindestens eine Einheit, ausgewählt aus der Gruppe, bestehend aus einer Vinylcycloalkeneinheit mit 7 bis 10 Kohlenstoffatomen, worin alle Kohlenstoff-Kohlenstoff-Doppelbindungen hydriert sind, einer konjugierten Dieneinheit mit 4 bis 8 Kohlenstoffatomen, worin alle Kohlenstoff-Kohlenstoff-Doppelbindungen hydriert sind, und einer konjugierten Cycloalkadieneinheit mit 5 bis 8 Kohlenstoffatomen, worin alle Kohlenstoff-Kohlenstoff-Doppelbindungen hydriert sind.

2. Mehrschicht-Elektrolytmembran nach Anspruch 1, wobei mindestens zwei der konstitutiven Elektrolytmembranen das Blockcopolymer (I) umfassen.

3. Mehrschicht-Elektrolytmembran nach Anspruch 1 oder 2, wobei, wenn die Zahl der konstitutiven Elektrolytmembranen zwei ist, weisen sie voneinander unterschiedliche Ionenaustauschkapazitäten auf, und wenn die Zahl der konstitutiven Elektrolytmembranen drei oder mehr ist, weisen mindestens zwei von ihnen voneinander unterschiedliche Ionenaustauschkapazitäten auf.

4. Mehrschicht-Elektrolytmembran nach einem der Ansprüche 1 bis 3, wobei mindestens eine der konstitutiven Elektrolytmembranen das Blockcopolymer (I) umfasst und eine Ionenaustauschkapazität von 0,7 bis 3,0 meq/g aufweist, mindestens eine der konstitutiven Elektrolytmembranen das Blockcopolymer (I) umfasst und eine Ionenaustauschkapazität von 0,3 bis 0,7 meq/g aufweist, und der Unterschied in der Ionenaustauschkapazität zwischen der Elektrolytmembran mit einer größeren Ionenaustauschkapazität und der Elektrolytmembran mit einer kleineren Ionenaustauschkapazität 0,03 meq/g oder mehr beträgt.

5. Mehrschicht-Elektrolytmembran nach einem der Ansprüche 1 bis 4, wobei der Anteil der aromatischen Vinylverbindungseinheit in dem Polymerblock (A) 50 Massen-% oder mehr beträgt.

6. Mehrschicht-Elektrolytmembran nach einem der Ansprüche 1 bis 5, wobei das Massenverhältnis des Polymerblocks (A) zu dem Polymerblock (B) 95:5 bis 5:95 beträgt.

7. Mehrschicht-Elektrolytmembran nach einem der Ansprüche 1 bis 6, wobei der flexible Polymerblock (B) ein Polymerblock ist, umfassend mindestens eine Einheit, ausgewählt aus der Gruppe, bestehend aus konjugierten Dieneinheiten mit jeweils 4 bis 8 Kohlenstoffatomen, in welcher Einheit alle Kohlenstoff-Kohlenstoff-Doppelbindungen hydriert sind.

8. Mehrschicht-Elektrolytmembran nach einem der Ansprüche 1 bis 7, wobei die ionenleitende Gruppe eine Gruppe ist, dargestellt durch -SO₃M oder -PO₃HM, worin M ein Wasserstoffatom, ein Ammoniumion oder ein Alkalimetallion darstellt.

9. Mehrschicht-Elektrolytmembran nach einem der Ansprüche 1 bis 8, wobei die aromatische Vinylverbindungseinheit eine aromatische Vinylverbindungseinheit ist, deren α-Kohlenstoff ein quartärer Kohlenstoff ist.

10. Mehrschicht-Elektrolytmembran nach Anspruch 9, wobei die aromatische Vinylverbindungseinheit, deren α-Kohlenstoff ein quartärer Kohlenstoff ist, eine aromatische Vinylverbindungseinheit ist, wobei das an den α-Kohlenstoff gebundene Wasserstoffatom durch eine Alkylgruppe mit 1 bis 4 Kohlenstoffatomen, durch eine halogenierte Alkylgruppe mit 1 bis 4 Kohlenstoffatomen oder durch eine Phenylgruppe ersetzt ist.

11. Mehrschicht-Elektrolytmembran nach Anspruch 9 oder 10, wobei die aromatische Vinylverbindungseinheit, deren α-Kohlenstoff ein quartärer Kohlenstoff ist, eine α-Methylstyroleinheit ist, und der flexible Polymerblock (B) ein Polymerblock ist, umfassend mindestens eine Einheit, ausgewählt aus der Gruppe, bestehend aus konjugierten Dieneinheiten mit jeweils 4 bis 8 Kohlenstoffatomen, wobei alle Kohlenstoff-Kohlenstoff-Doppelbindungen hydriert sind.

12. Membran-Elektroden-Einheit, wobei die Mehrschicht-Elektrolytmembran nach einem der Ansprüche 1 bis 11 verwendet wird.

13. Polymerelektrolyt-Brennstoffzelle, wobei die Membran-Elektroden-Einheit nach Anspruch 12 verwendet wird.

## Revendications

1. Une membrane multicouche électrolytique pour piles à combustible à électrolyte polymère, consistant en un laminé d'au moins deux membranes électrolytiques polymères, dont au moins une membrane comprend un copolymère bloc (I) qui comprend, en tant que constituants, un polymère bloc (A) ayant comme unité principale une unité de composé de vinyle aromatique et un polymère bloc flexible (B), a des groupes conducteurs d'ions sur le polymère bloc (A) et n'a pas de groupe conducteur d'ions sur le polymère bloc (B), membrane multicouche électrolytique dans laquelle au moins une des membranes électrolytiques constitutives a une capacité d'échange d'ions de 0,7 à 3,0 meq/g, au moins une des membranes électrolytiques constitutives a une capacité d'échange d'ions de 0,3 à 0,7 meq/g et la différence de capacité d'échange d'ions entre la membrane électrolytique ayant une plus grande capacité d'échange d'ions et la membrane électrolytique ayant une plus petite capacité d'échange d'ions est de 0,03 meq/g ou plus, et le polymère bloc flexible (B) est un polymère bloc comprenant au moins une unité sélectionnée parmi un groupe consistant en une unité de vinylcycloalkène ayant de 7 à 10 atomes de carbone dans laquelle toutes les doubles liaisons carbone-carbone sont hydrogénées, une unité diénique conjuguée ayant de 4 à 8 atomes de carbone dans laquelle toutes les doubles liaisons carbone-carbone sont hydrogénées et une unité de cycloalcadiène conjugué ayant de 5 à 8 atomes de carbone dans laquelle toute les doubles liaisons carbone-carbone sont hydrogénées.

2. La membrane multicouche électrolytique selon la revendication 1, dans laquelle au moins deux des membranes électrolytiques constitutives comprennent le copolymère bloc (I).

3. La membrane multicouche électrolytique selon la revendication 1 ou 2, dans laquelle lorsque le nombre de membranes électrolytiques constitutives est de deux, elles ont des capacités d'échange d'ions mutuellement différentes, et lorsque le nombre de membranes électrolytiques constitutives est de trois ou plus, au moins deux d'entre elles ont des capacités d'échange d'ions mutuellement différentes.

4. La membrane multicouche électrolytique selon l'une quelconque des revendications 1 à 3, dans laquelle au moins une des membranes électrolytiques constitutives comprend le copolymère bloc (I) et a une capacité d'échange d'ions de 0,7 à 3,0 meq/g, au moins une des membranes électrolytiques constitutives comprend le copolymère bloc (I) et a une capacité d'échange d'ions de 0,3 à 0,7 meq/g et la différence de capacité d'échange d'ions entre la membrane électrolytique ayant une plus grande capacité d'échange d'ions et la membrane électrolytique ayant une plus petite capacité d'échange d'ions est de 0,03 meq/g ou plus.

5. La membrane multicouche électrolytique selon l'une quelconque des revendications 1 à 4, dans laquelle la proportion de l'unité de composé de vinyle aromatique dans le polymère bloc (A) est de 50% en masse ou plus.

6. La membrane multicouche électrolytique selon l'une quelconque des revendications 1 à 5, dans laquelle le rapport de masse du polymère bloc (A) au polymère bloc (B) est de 95:5 à 5:95.

7. La membrane multicouche électrolytique selon l'une quelconque des revendications 1 à 6, dans laquelle le polymère bloc flexible (B) est un polymère bloc comprenant au moins une unité sélectionnée parmi le groupe consistant en des unités diéniques conjuguées ayant chacune de 4 à 8 atomes de carbone, unité dans laquelle toutes les doubles liaisons carbone-carbone sont hydrogénées.

8. La membrane multicouche électrolytique selon l'une quelconque des revendications 1 à 7, dans laquelle le groupe conducteur d'ions est un groupe représenté par -SO₃M ou -PO₃HM dans lesquels M représente un atome d'hydrogène, un ion d'ammonium ou un ion de métal alcalin.

9. La membrane multicouche électrolytique selon l'une quelconque des revendications 1 à 8, dans laquelle le composé de vinyle aromatique est une unité de composé de vinyle aromatique dont l'α-carbone est un carbone quaternaire.

10. La membrane multicouche électrolytique selon la revendication 9, dans laquelle l'unité de composé de vinyle aromatique dont l'α-carbone est un carbone quaternaire est une unité de composé de vinyle aromatique dans laquelle l'atome d'hydrogène lié à l'α-carbone est remplacé par un groupe alkyle ayant de 1 à 4 atomes de carbone, un groupe alkyle halogéné ayant de 1 à 4 atomes de carbone ou un groupe phényle.

11. La membrane multicouche électrolytique selon la revendication 9 ou 10, dans laquelle l'unité de composé de vinyle aromatique dont l'α-carbone est un carbone quaternaire est une unité d'α-méthylstyrène, et le polymère bloc flexible (B) est un polymère bloc comprenant au moins une unité sélectionnée parmi le groupe consistant en des unités diéniques conjuguées ayant chacune de 4 à 8 atomes de carbone dans lesquelles toutes les doubles liaisons carbone-carbone sont hydrogénées.

12. Un ensemble d'électrode à membrane dans lequel la membrane multicouche électrolytique selon l'une quelconque des revendications 1 à 11 est utilisée.

13. Une pile à combustible électrolytique polymère dans laquelle l'ensemble d'électrode à membrane selon la revendication 12 est utilisé.
